# EUROPEAN PATENT APPLICATION

(11) **EP 4 746 274 A1**
(43) Date of publication of application: **20.05.2026**
(21) Application number: 25215183.2
(22) Date of filing: 12.11.2025
(51) Int. Cl.: H02M 3/335, H02M 3/28, H02M 1/32, H02M 1/36, H02J 7/06

(54) **BULK CAPACITOR CHARGING SYSTEM AND CONTROL METHOD**

(30) Priority: 18.11.2024 US 202463721886 P
(71) Applicant: Delta Electronics, Inc., Neihu, Taipei 11491 (TW)
(72) Inventor: Phukan, Ripun, Morrisville, NC 27560 (US); Barbosa, Peter Mantovanelli, 320023 Taoyuan City (TW)
(74) Representative: Uexküll & Stolberg

(57) **Abstract**

A bulk capacitor pre-charge control method includes providing a power converter (100) coupled between a power source (BL) and a bulk capacitor (CB), in a first pre-charge period, activating one switch selected from switches (SR1, SR2, SR3, SR4) of the first rectifier (101) and the second rectifier (102) to charge the bulk capacitor (CB), in a second pre-charge period following the first pre-charge period, activating two switches selected from the switches (SR1, SR2, SR3, SR4) of the first rectifier (101) and the second rectifier (102) to charge the bulk capacitor (CB), and in a third pre-charge period following the second pre-charge period, activating three switches selected from the switches (SR1, SR2, SR3, SR4) of the first rectifier (101) and the second rectifier (102) to charge the bulk capacitor (CB), wherein two of the three switches are synchronized with each other.

## Description

### TECHNICAL FIELD

Embodiments of the disclosure relate to power-conversion systems in electric vehicles, and more particularly to control methods for pre-charging a bulk capacitor on a high voltage bus to limit inrush current.

### BACKGROUND

Electric vehicle powertrains typically include a high voltage system and a low voltage system. The high voltage system comprises a high voltage battery pack coupled to a high voltage bus that supplies one or more loads (*e.g.*, traction inverter, on-board charger, auxiliaries). At the high voltage bus, a relatively large bulk capacitor is employed to stabilize the bus voltage and absorb ripple. The low voltage system includes one or more low voltage batteries that are electrically coupled to the high voltage bus through a power converter or a plurality of power converters (*e.g*., a power converter providing energy transfer between the low voltage and high voltage systems).

When the high voltage system is off, the bulk capacitor is discharged or at a low state of charge. If the main contactor/relay between the high voltage battery and the high voltage bus is closed while the bulk capacitor is discharged, a large inrush current can occur. Such a large inrush current causes a variety of issues such as contactor failures, electromagnetic interference, and electrical overstress of the high voltage battery pack.

To reduce the inrush current, a resistive pre-charge path is employed. The resistive pre-charge path is formed by an auxiliary relay in series with a pre-charge resistor. In operation, the pre-charge path is closed first to charge the bulk capacitor in a controlled manner. After the capacitor voltage is approximately equal to the voltage of the high voltage battery pack, the main relay is closed and the pre-charge path is opened.

While effective at limiting inrush, the resistive pre-charge path introduces several drawbacks. First, the pre-charge resistor dissipates significant energy during each pre-charge process, adding heat that may require derating or additional thermal margin. Second, the auxiliary relay and pre-charge resistor add cost, volume, weight, wiring complexity, and potential failure modes.

Accordingly, there is a need for pre-charge techniques that limit inrush current while reducing or eliminating dedicated pre-charge resistors and auxiliary relays, thereby lowering losses, cost, size, and startup latency, and improving reliability and safety of the pre-charge process of the high voltage bus. The present disclosure addresses this need.

### SUMMARY

These and other problems are generally solved or circumvented, and technical advantages are generally achieved, by preferred embodiments of the present disclosure which provide a control method for pre-charging a bulk capacitor at a high voltage bus.

In accordance with an embodiment, a method comprises providing a power converter coupled between a power source and a bulk capacitor, wherein the power converter comprises a first transformer, a second transformer, a first rectifier coupled to a secondary side of the first transformer, a second rectifier coupled to a secondary side of the second transformer, and a primary side bridge coupled between the bulk capacitor and primary sides of the first transformer and the second transformer, in a first pre-charge period, activating one switch selected from switches of the first rectifier and the second rectifier to charge the bulk capacitor, in a second pre-charge period following the first pre-charge period, activating two switches selected from the switches of the first rectifier and the second rectifier to charge the bulk capacitor, and in a third pre-charge period following the second pre-charge period, activating three switches selected from the switches of the first rectifier and the second rectifier to charge the bulk capacitor, wherein two of the three switches are synchronized with each other.

In accordance with another embodiment, a method comprises configuring a power converter to be coupled between a power source and a bulk capacitor, wherein the power converter comprises a first transformer, a second transformer, a first rectifier coupled between the first transformer and the power source, a second rectifier coupled between the second transformer and the power source, and a primary side bridge coupled between the bulk capacitor and primary sides of the first transformer and the second transformer, in a first pre-charge period, turning on and off one switch selected from switches of the first rectifier and the second rectifier to charge the bulk capacitor, in a second pre-charge period following the first pre-charge period, turning on and off two switches selected from the switches of the first rectifier and the second rectifier to charge the bulk capacitor, and in a third pre-charge period following the second pre-charge period, turning on and off four switches of the first rectifier and the second rectifier to charge the bulk capacitor.

In accordance with yet another embodiment, a system comprises a bulk capacitor coupled to a high voltage power source through a relay, and coupled to a low voltage power source through a power converter comprising a first transformer, a second transformer, a first rectifier coupled between the first transformer and the low voltage power source, a second rectifier coupled between the second transformer and the low voltage power source, and a primary side bridge coupled between the bulk capacitor and primary sides of the first transformer and the second transformer, and a controller configured to in a first pre-charge period, activate one switch selected from switches of the first rectifier and the second rectifier to charge the bulk capacitor, in a second pre-charge period following the first pre-charge period, activate two switches selected from the switches of the first rectifier and the second rectifier to charge the bulk capacitor, and in a third pre-charge period following the second pre-charge period, activate three switches selected from the switches of the first rectifier and the second rectifier to charge the bulk capacitor, wherein two of the three switches are synchronized with each other.

The foregoing has outlined rather broadly the features and technical advantages of the present disclosure in order that the detailed description of the disclosure that follows may be better understood. Additional features and advantages of the disclosure will be described hereinafter which form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates a block diagram of a power conversion system in accordance with various embodiments of the present disclosure;
Figure 2 illustrates a schematic diagram of the power converter shown in Figure 1 in accordance with various embodiments of the present disclosure;
Figure 3 illustrates a timing diagram of the first pre-charge control method in accordance with various embodiments of the present disclosure;
Figure 4 illustrates the operating principle and corresponding equivalent circuit of the power converter when configured to operate in the energy transfer phase of the first pre-charge period in accordance with various embodiments of the present disclosure;
Figure 5 illustrates the operating principle and corresponding equivalent circuit of the power converter when configured to operate in the SR OFF phase of the first pre-charge period in accordance with various embodiments of the present disclosure;
Figure 6 illustrates the operating principle and corresponding equivalent circuit of the power converter when configured to operate in the energy storage phase of the first pre-charge period in accordance with various embodiments of the present disclosure;
Figure 7 illustrates the operating principle and corresponding equivalent circuit of the power converter when configured to operate in the first energy transfer phase of the second pre-charge period in accordance with various embodiments of the present disclosure;
Figure 8 illustrates the operating principle and corresponding equivalent circuit of the power converter when configured to operate in the freewheeling phase of the second pre-charge period in accordance with various embodiments of the present disclosure;
Figure 9 illustrates the operating principle and corresponding equivalent circuit of the power converter when configured to operate in the second energy transfer phase of the second pre-charge period in accordance with various embodiments of the present disclosure;
Figure 10 illustrates the operating principle and corresponding equivalent circuit of the power converter when configured to operate in the first energy transfer phase of the third pre-charge period in accordance with various embodiments of the present disclosure;
Figure 11 illustrates the operating principle and corresponding equivalent circuit of the power converter when configured to operate in the freewheeling phase of the third pre-charge period in accordance with various embodiments of the present disclosure;
Figure 12 illustrates the operating principle and corresponding equivalent circuit of the power converter when configured to operate in the second energy transfer phase of the third pre-charge period in accordance with various embodiments of the present disclosure;
Figure 13 illustrates the pre-charge profile of the bulk capacitor in accordance with various embodiments of the present disclosure;
Figure 14 illustrates the operating principle of a second pre-charge control method together with an associated feedback control loop in accordance with various embodiments of the present disclosure;
Figure 15 illustrates a block diagram of the proportional-integral control apparatus shown in Figure 14 in accordance with various embodiments of the present disclosure;
Figure 16 illustrates a timing diagram of the third pre-charge control method in accordance with various embodiments of the present disclosure;
Figure 17 illustrates the operating principle and corresponding equivalent circuit of the power converter when configured to operate in the energy transfer phase of the first pre-charge period in accordance with various embodiments of the present disclosure;
Figure 18 illustrates the operating principle and corresponding equivalent circuit of the power converter when configured to operate in the SR OFF phase of the first pre-charge period in accordance with various embodiments of the present disclosure;
Figure 19 illustrates the operating principle and corresponding equivalent circuit of the power converter when configured to operate in the energy storage phase of the first pre-charge period in accordance with various embodiments of the present disclosure;
Figure 20 illustrates the operating principle and corresponding equivalent circuit of the power converter when configured to operate in the first energy transfer phase of the second pre-charge period in accordance with various embodiments of the present disclosure;
Figure 21 illustrates the operating principle and corresponding equivalent circuit of the power converter when configured to operate in the freewheeling phase of the second pre-charge period in accordance with various embodiments of the present disclosure;
Figure 22 illustrates the operating principle and corresponding equivalent circuit of the power converter when configured to operate in the second energy transfer phase of the second pre-charge period in accordance with various embodiments of the present disclosure;
Figure 23 illustrates the operating principle and corresponding equivalent circuit of the power converter when configured to operate in the first energy transfer phase of the third pre-charge period in accordance with various embodiments of the present disclosure;
Figure 24 illustrates the operating principle of the power converter when configured to operate in the energy storage phase of the third pre-charge period in accordance with various embodiments of the present disclosure;
Figure 25 illustrates the corresponding equivalent circuit of the power converter when configured to operate in the energy storage phase of the third pre-charge period in accordance with various embodiments of the present disclosure;
Figure 26 illustrates the operating principle and corresponding equivalent circuit of the power converter when configured to operate in the second energy transfer phase of the third pre-charge period in accordance with various embodiments of the present disclosure;
Figure 27 illustrates the operating principle and corresponding equivalent circuit of the power converter when configured to operate in the first energy transfer phase of the fourth pre-charge period in accordance with various embodiments of the present disclosure;
Figure 28 illustrates the operating principle and corresponding equivalent circuit of the power converter when configured to operate in the freewheeling phase of the fourth pre-charge period in accordance with various embodiments of the present disclosure;
Figure 29 illustrates the operating principle and corresponding equivalent circuit of the power converter when configured to operate in the second energy transfer phase of the fourth pre-charge period in accordance with various embodiments of the present disclosure;
Figure 30 illustrates a timing diagram of the fourth pre-charge control method in accordance with various embodiments of the present disclosure;
Figure 31 illustrates the operating principle and corresponding equivalent circuit of the power converter when configured to operate in the energy transfer phase of the first pre-charge period in accordance with various embodiments of the present disclosure;
Figure 32 illustrates the operating principle and corresponding equivalent circuit of the power converter when configured to operate in the SR OFF phase of the first pre-charge period in accordance with various embodiments of the present disclosure;
Figure 33 illustrates the operating principle and corresponding equivalent circuit of the power converter when configured to operate in the energy storage phase of the first pre-charge period in accordance with various embodiments of the present disclosure;
Figure 34 illustrates the operating principle and corresponding equivalent circuit of the power converter when configured to operate in the first energy transfer phase of the second pre-charge period in accordance with various embodiments of the present disclosure;
Figure 35 illustrates the operating principle and corresponding equivalent circuit of the power converter when configured to operate in the energy storage phase of the second pre-charge period in accordance with various embodiments of the present disclosure;
Figure 36 illustrates the operating principle and corresponding equivalent circuit of the power converter when configured to operate in the SR OFF phase of the second pre-charge period in accordance with various embodiments of the present disclosure;
Figure 37 illustrates the operating principle and corresponding equivalent circuit of the power converter when configured to operate in the first energy transfer phase of the third pre-charge period in accordance with various embodiments of the present disclosure;
Figure 38 illustrates the operating principle and corresponding equivalent circuit of the power converter when configured to operate in the freewheeling phase of the third pre-charge period in accordance with various embodiments of the present disclosure;
Figure 39 illustrates the operating principle and corresponding equivalent circuit of the power converter when configured to operate in the second energy transfer phase of the third pre-charge period in accordance with various embodiments of the present disclosure;
Figure 40 illustrates a control method of determining the transition between two different pre-charge periods in accordance with various embodiments of the present disclosure;
Figure 41 illustrates a control method of selecting one rectifying switch in a rotating manner to improve the reliability of the power converter in accordance with various embodiments of the present disclosure;
Figure 42 illustrates a schematic diagram of another implementation of the power converter shown in Figure 1 in accordance with various embodiments of the present disclosure;
Figure 43 illustrates a flow chart of a control method for pre-charging a bulk capacitor shown in Figure 1 in accordance with various embodiments of the present disclosure; and
Figure 44 illustrates a flow chart of another control method for pre-charging a bulk capacitor shown in Figure 1 in accordance with various embodiments of the present disclosure.

Corresponding numerals and symbols in the different figures generally refer to corresponding parts unless otherwise indicated. The figures are drawn to clearly illustrate the relevant aspects of the various embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present disclosure provides many applicable inventive concepts that can be embodied in a wide variety of specific contexts. The specific embodiments discussed are merely illustrative of specific ways to make and use the disclosure, and do not limit the scope of the disclosure.

The present disclosure will be described with respect to preferred embodiments in a specific context, namely control methods for pre-charging a bulk capacitor on a high voltage bus in an electric vehicle power conversion system. The disclosure may also be applied, however, to a variety of power conversion systems. Hereinafter, various embodiments will be explained in detail with reference to the accompanying drawings.

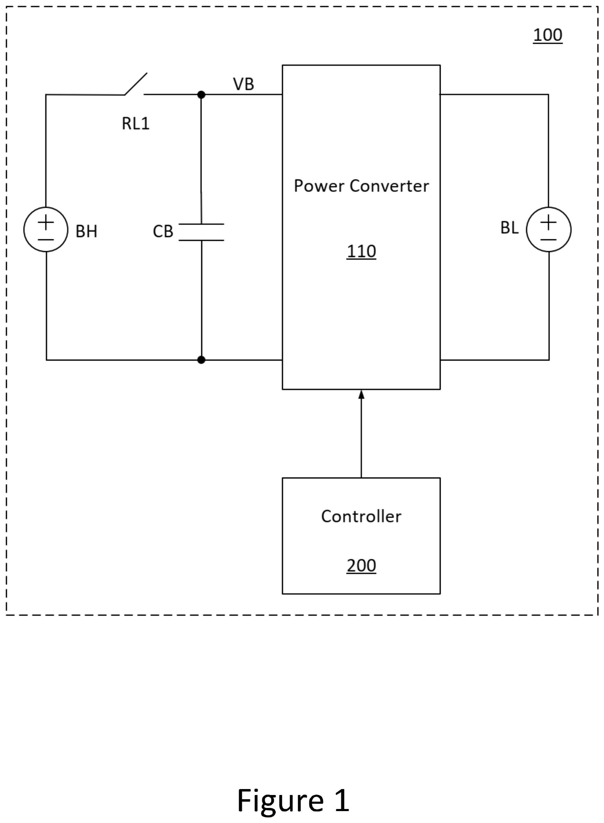

Figure 1 illustrates a block diagram of a power conversion system in accordance with various embodiments of the present disclosure. The power conversion system 100 comprises a high voltage power source BH, a relay RL1, a bulk capacitor CB, a power converter 110, a low voltage power source BL and a controller 200. As shown in Figure 1, the high voltage power source BH is connected to the bulk capacitor CB through the relay RL1. The bus on the positive terminal of the bulk capacitor CB is a high voltage bus. The high voltage bus is denoted as VB as shown in Figure 1. The power converter 110 is coupled between the bulk capacitor CB and the low voltage power source BL. The controller 200 is electrically coupled to the power converter 110.

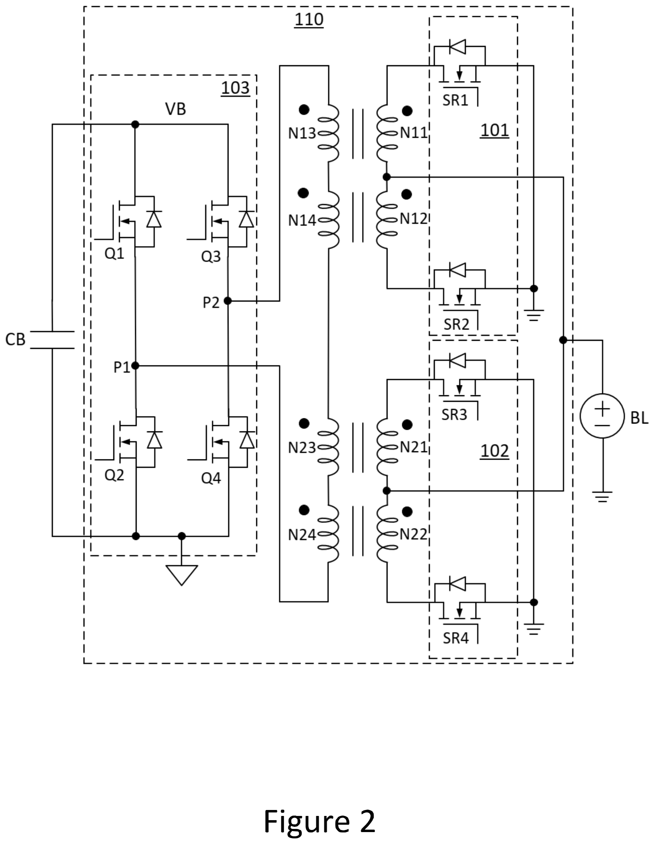

In some embodiments, the power conversion system 100 is a power supply system in an electric vehicle. The high voltage power source BH comprises a high voltage battery pack. The voltage of the high voltage power source BH is in a range from about 260 V to about 460 V. The bulk capacitor CB may include a plurality of capacitors connected in parallel to increase effective capacitance. In some embodiments, the power converter 110 is implemented as an isolated power converter comprising a first transformer, a second transformer, a first rectifier coupled to a secondary side of the first transformer, a second rectifier coupled to a secondary side of the second transformer and a primary side bridge coupled between the bulk capacitor CB and primary sides of the first transformer and the second transformer. The detailed structure of the power converter 110 will be described below with respect to Figure 2. The low voltage power source BL includes one or more low voltage batteries. The voltage of the low voltage power source BL is in a range from about 9.6 V to about 15.5 V.

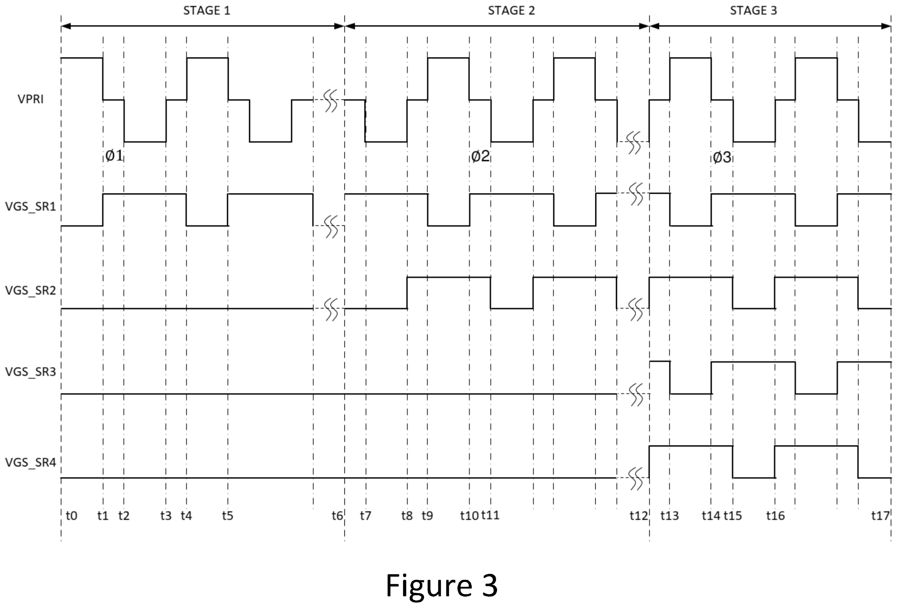

The controller 200 is configured to generate gate drive signals for the switches of the power converter 110. In particular, the controller 200 is configured to generate gate drive signals for configuring the power converter 110 during a pre-charge process of the bulk capacitor CB such that inrush current is reduced, and voltage stress on the switches of the power converter 110 is mitigated. The detailed operation principle of the controller 200 will be described below with respect to Figures 3-42.

In operation, the controller 200 is capable of controlling the pre-charge process of the bulk capacitor CB using multiple pre-charge control methods. Each control method combines a staged turn-on sequence and a phase shift control scheme.

In a first pre-charge control method, the pre-charge process includes three pre-charge periods. In a first pre-charge period, one rectifying switch selected from switches of the first rectifier and the second rectifier is activated. In a second pre-charge period following the first pre-charge period, two rectifying switches selected from the switches of the first rectifier and the second rectifier are activated. In a third pre-charge period following the second pre-charge period, four rectifying switches of the first rectifier and the second rectifier are activated. The operating principle of the first pre-charge control method will be described in detail below with respect to Figures 3-13. In some embodiments, the pre-charge periods occur consecutively. For example, the second pre-charge period follows the first pre-charge period immediately, and the third pre-charge period follows the second pre-charge period immediately.

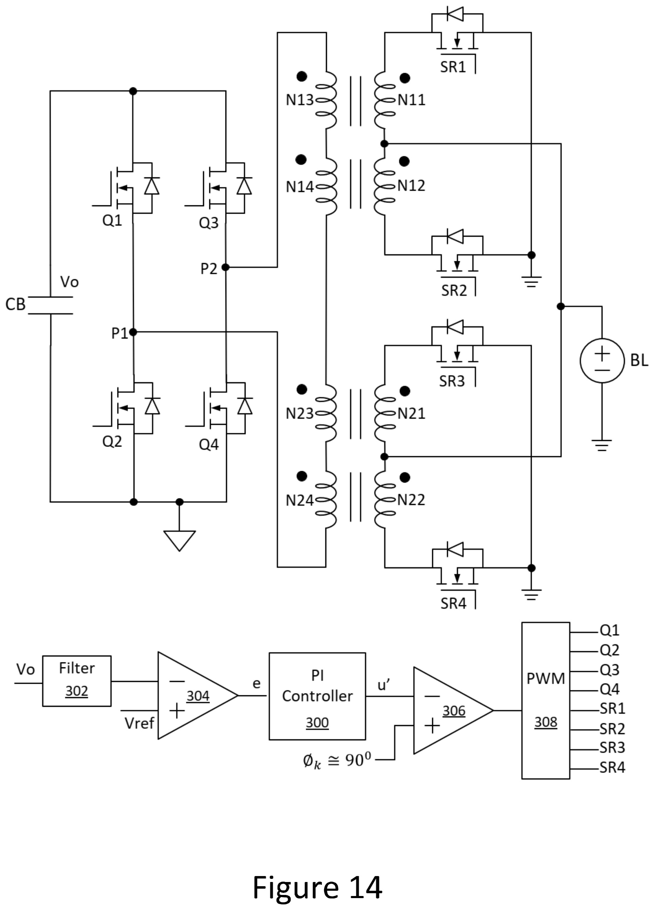

In a second pre-charge control method, the pre-charge process is similar to that of the first pre-charge control method except that a feedback loop is employed to control the voltage across the bulk capacitor CB. The operating principle of the second pre-charge control method will be described in detail below with respect to Figures 14-15.

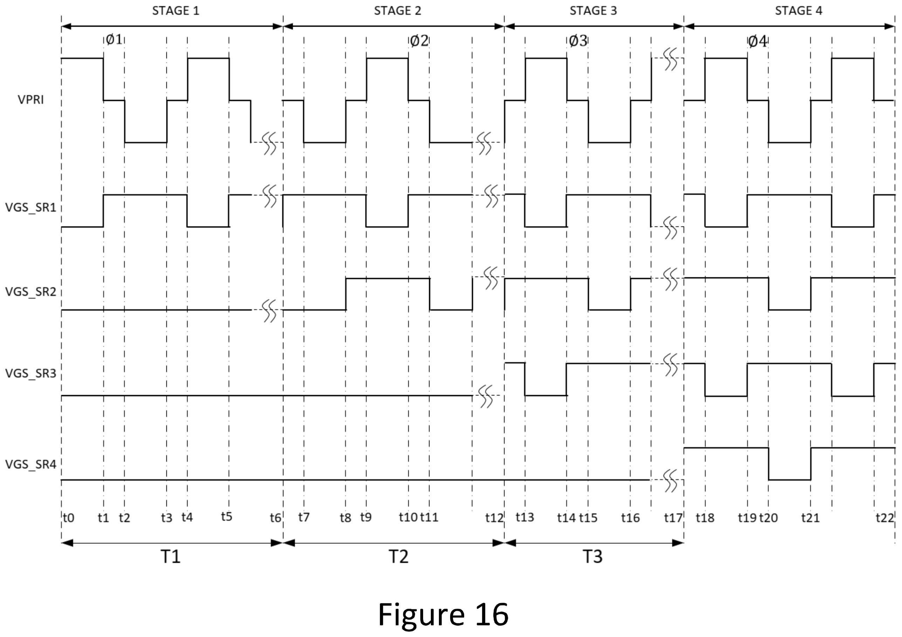

In a third pre-charge control method, the pre-charge process includes four pre-charge periods. In a first pre-charge period, one rectifying switch selected from switches of the first rectifier and the second rectifier is activated. In a second pre-charge period following the first pre-charge period, two rectifying switches selected from the switches of the first rectifier and the second rectifier are activated. In a third pre-charge period following the second pre-charge period, three rectifying switches selected from the switches of the first rectifier and the second rectifier are activated. In a fourth pre-charge period following the third pre-charge period, four rectifying switches of the first rectifier and the second rectifier are activated. The operating principle of the third pre-charge control method will be described in detail below with respect to Figures 16-29.

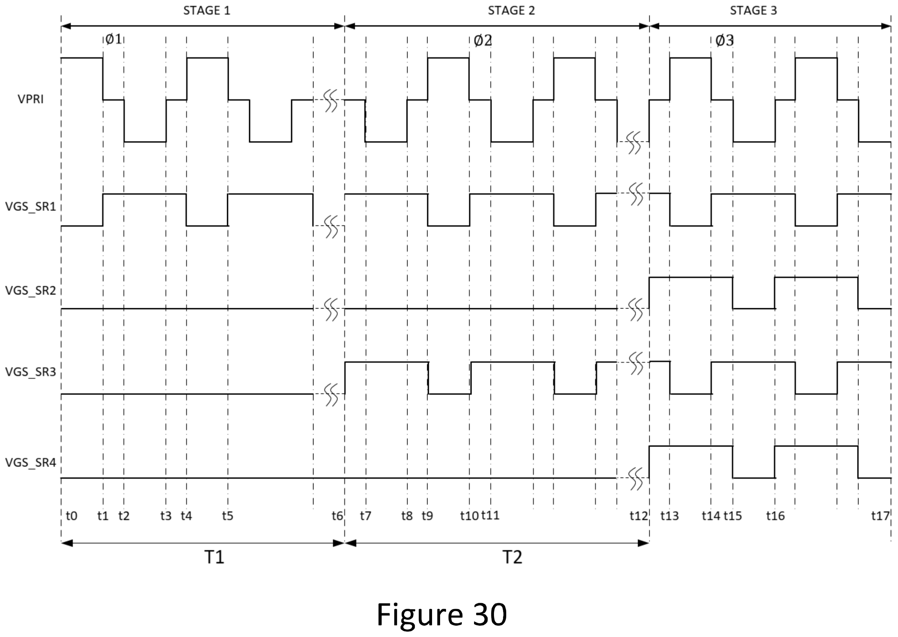

In a fourth pre-charge control method, the pre-charge process includes three pre-charge periods. In a first pre-charge period, one rectifying switch selected from switches of the first rectifier and the second rectifier is activated. In a second pre-charge period following the first pre-charge period, two rectifying switches selected from the switches of the first rectifier and the second rectifier are activated. In a third pre-charge period following the second pre-charge period, four rectifying switches of the first rectifier and the second rectifier are activated. The operating principle of the fourth pre-charge control method will be described in detail below with respect to Figures 30-39.

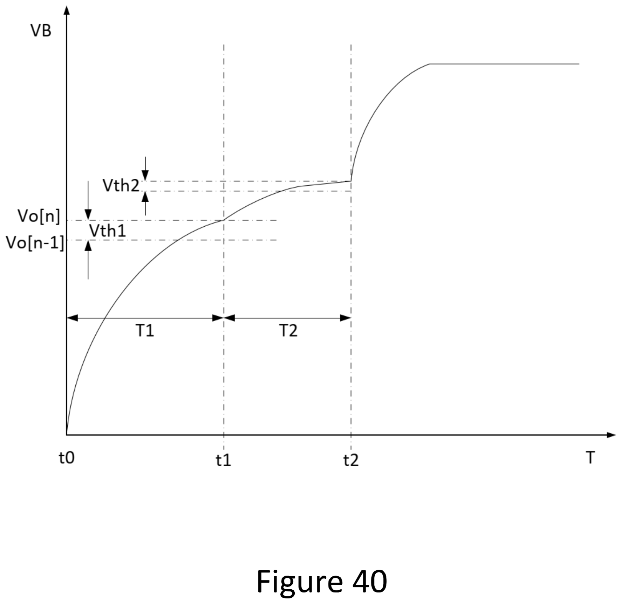

In operation, the controller 200 is capable of determining the transition between two different pre-charge periods through sampling the voltage across the bulk capacitor CB at successive sample times to obtain a current sample and a preceding sample, determining a voltage difference between the current sample and the preceding sample, and configuring the power converter 110 to transition into a different pre-charge period when the voltage difference is less than a predetermined threshold. The operating principle of this transition control scheme will be described in detail below with respect to Figure 40.

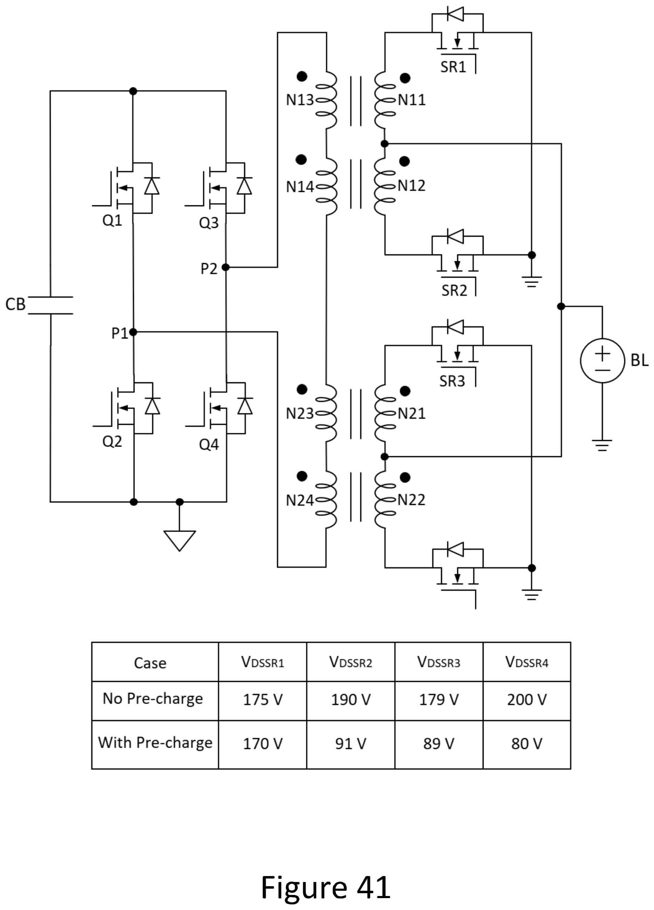

In operation, the controller 200 is capable of selecting one rectifying switch of the rectifying switches of the power converter 110 for activation during the first pre-charge period. The activated rectifying switch is subject to a high voltage during the pre-charge process. To improve reliability, the controller 200 is further capable of rotating the selection of the rectifying switch by activating different rectifying switches in successive pre-charge cycles. The operating principle of this rectifying switch selection control scheme will be described in detail below with respect to Figure 41.

Figure 2 illustrates a schematic diagram of the power converter shown in Figure 1 in accordance with various embodiments of the present disclosure. The power converter 110 is implemented as an isolated power converter. As shown in Figure 2, the power converter 110 comprises a primary side bridge 103, a first transformer, a second transformer, a first rectifier 101 and a second rectifier 102.

The primary side bridge 103 comprises a first switch Q1, a second switch Q2, a third switch Q3 and a fourth switch Q4. As shown in Figure 2, the first switch Q1 and the second switch Q2 are connected in series between VB and ground. A common node of the first switch Q1 and the second switch Q2 is denoted as P1. The third switch Q3 and the fourth switch Q4 are connected in series between VB and ground. A common node of the third switch Q3 and the fourth switch Q4 is denoted as P2.

The first transformer comprises a first primary winding N13, a second primary winding N14, a first secondary winding N11 and a second secondary winding N12. As shown in Figure 2, the first primary winding N13 is magnetically coupled to the first secondary winding N11. The second primary winding N14 is magnetically coupled to the second secondary winding N12.

The second transformer comprises a first primary winding N23, a second primary winding N24, a first secondary winding N21 and a second secondary winding N22. As shown in Figure 2, the first primary winding N23 is magnetically coupled to the first secondary winding N21. The second primary winding N24 is magnetically coupled to the second secondary winding N22.

It should be noted that as is conventional in transformer representations, a polarity indicator (e.g., dot symbols shown in Figure 2) is used to denote the relative instantaneous polarity of the transformer windings. When a voltage of a given polarity is applied across a primary winding terminal marked with the dot, the voltage induced at the corresponding secondary winding terminal marked with the dot exhibits the same instantaneous polarity. Conversely, the terminal without the dot exhibits the opposite polarity. As shown in Figure 2, each winding (*e.g*., N11) has a first terminal (dotted terminal) and a second terminal (non-dotted terminal).

As shown in Figure 2, the first primary winding N13, the second primary winding N14, the first primary winding N23 and the second primary winding N24 are connected in series between the common node (P2) of the third switch Q3 and the fourth switch Q4, and the common node (P1) of the first switch Q1 and the second switch Q2. The first secondary winding N11 and the second secondary winding N12 are connected in series between two terminals of the first rectifier 101. A common node of the first secondary winding N11 and the second secondary winding N12 is connected to the low voltage power source BL. The first secondary winding N21 and the second secondary winding N22 are connected in series between two terminals of the second rectifier 102. A common node of the first secondary winding N21 and the second secondary winding N22 is connected to the low voltage power source BL.

The first rectifier 101 comprises a first rectifying switch SR1 and a second rectifying switch SR2. The first rectifying switch SR1 is connected between the dotted terminal of the first secondary winding N11 and ground. The second rectifying switch SR2 is connected between the non-dotted terminal of the second secondary winding N12 and ground.

The second rectifier 102 comprises a third rectifying switch SR3 and a fourth rectifying switch SR4. The third rectifying switch SR3 is connected between the dotted terminal of the first secondary winding N21 and ground. The fourth rectifying switch SR4 is connected between the non-dotted terminal of the second secondary winding N22 and ground.

In accordance with an embodiment, the switches of Figure 2 (*e.g*., switches Q1-Q4 and SR1-SR4) may be metal oxide semiconductor field-effect transistor (MOSFET) devices, bipolar junction transistor (BJT) devices, super junction transistor (SJT) devices, insulated gate bipolar transistor (IGBT) devices, gallium nitride (GaN) based power devices and/or the like.

It should be noted while Figure 2 shows the switches Q1-Q4 and SR1-SR4 are implemented as single n-type transistors, a person skilled in the art would recognize there may be many variations, modifications and alternatives. For example, depending on different applications and design needs, at least some of the switches may be implemented as p-type transistors. Furthermore, each switch shown in Figure 2 may be implemented as a plurality of switches connected in parallel. Moreover, a capacitor may be connected in parallel with one switch to achieve zero voltage switching (ZVS)/zero current switching (ZCS).

Figure 3 illustrates a timing diagram of the first pre-charge control method in accordance with various embodiments of the present disclosure. The horizontal axis of Figure 3 represents intervals of time. There are five rows in Figure 3. The first row VPRI represents the voltage between P2 and P1. The second row VGS_SR1 represents the gate drive signal of the first rectifying switch SR1. The third row VGS_SR2 represents the gate drive signal of the second rectifying switch SR2. The fourth row VGS_SR3 represents the gate drive signal of the third rectifying switch SR3. The fifth row VGS_SR4 represents the gate drive signal of the fourth rectifying switch SR4.

In the first pre-charge control method, the pre-charge process includes three pre-charge periods. The pre-charge process starts at t0 and ends at t17. The first pre-charge period is from t0 to t6. The first pre-charge period may be alternatively referred to as a first stage (STAGE 1) of the pre-charge process. In the first pre-charge period, a phase shift control scheme is applied to the power converter 110. The phase shift angle is denoted as Ø1. As shown in Figure 3, Ø1 is from t1 to t2. The second pre-charge period is from t6 to t12. The second pre-charge period may be alternatively referred to as a second stage (STAGE 2) of the pre-charge process. In the second pre-charge period, the phase shift control scheme is applied to the power converter 110. The phase shift angle is denoted as Ø2. As shown in Figure 3, Ø2 is from t10 to t11. The third pre-charge period is from t12 to t17. The third pre-charge period may be alternatively referred to as a third stage (STAGE 3) of the pre-charge process. In the third pre-charge period, the phase shift control scheme is applied to the power converter 110. The phase shift angle is denoted as Ø3. As shown in Figure 3, Ø3 is from t14 to t15.

In some embodiments, Ø2 is greater than Ø1. Ø3 is greater than Ø2. In alternative embodiments, Ø2 is equal to Ø1. Ø3 is greater than Ø2.

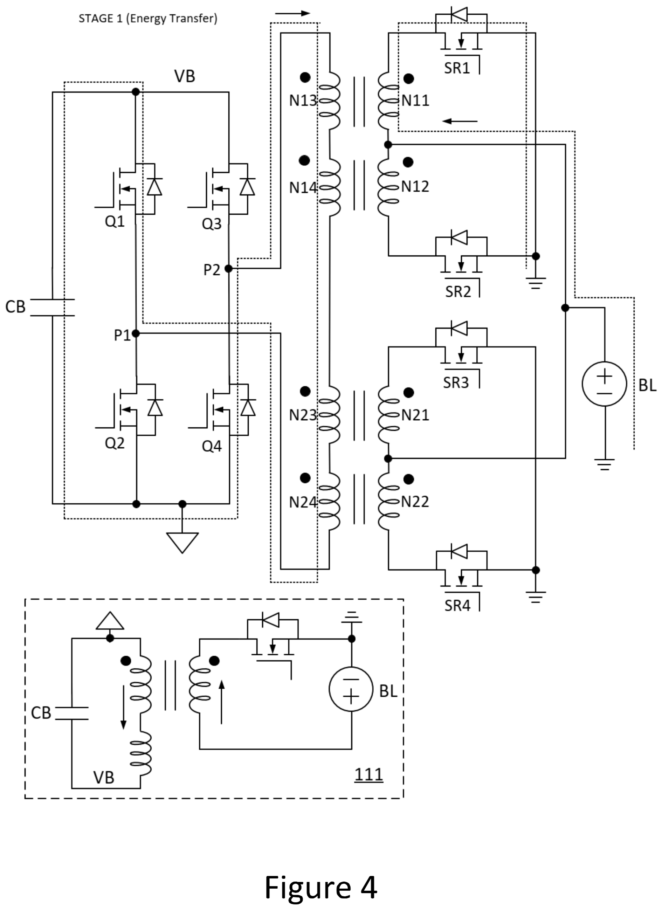

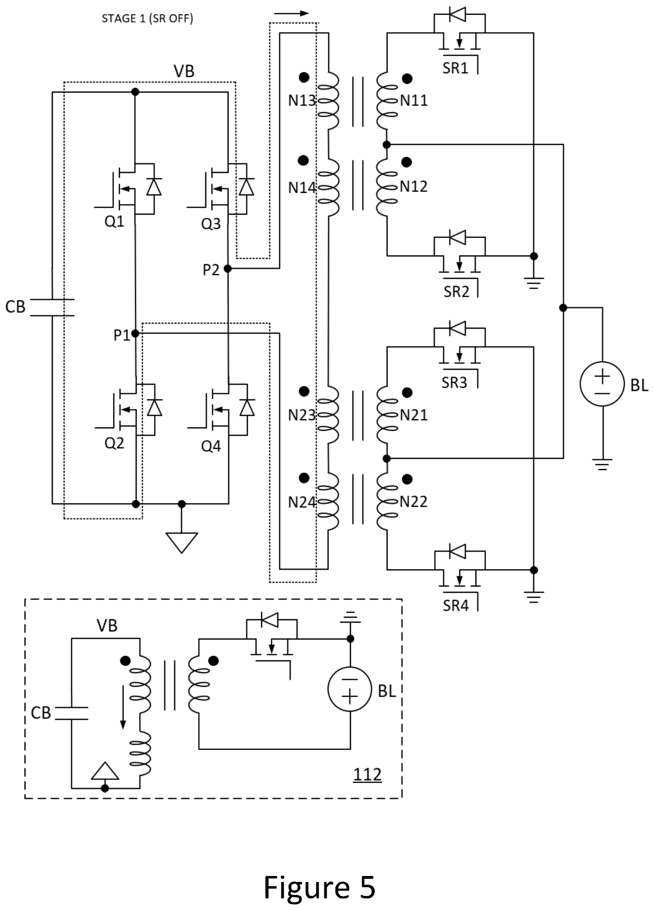

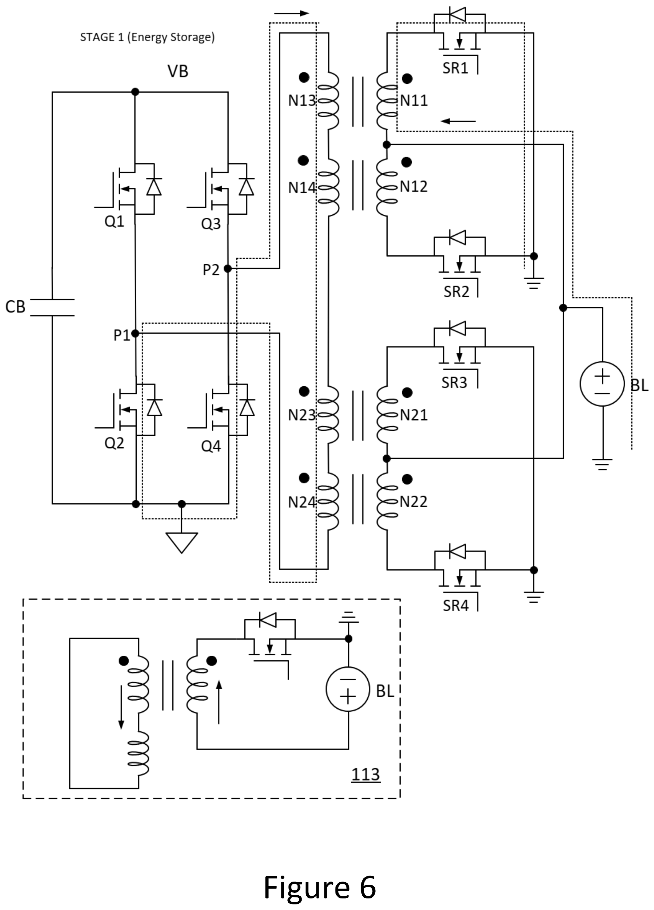

In the first pre-charge period, the first rectifying switch SR1 is activated. According to the on/off configuration of Q1-Q4 and SR1, the power converter 110 operates in three different phases, namely an energy transfer phase, an SR OFF phase and an energy storage phase. The SR OFF phase refers to an operating condition where synchronous rectifiers (SR1, SR2, SR3 and SR4) are turned off. From t2 to t3, Q1 and Q4 are turned on, and Q2 and Q3 are turned off. SR1 is turned on. Energy is transferred from the low voltage power source BL to the bulk capacitor CB. The power converter 110 operates in the energy transfer phase. The detailed operating principle will be discussed below with respect to Figure 4. From t4 to t5, Q1 and Q4 are turned off, and Q2 and Q3 are turned on. SR1 is turned off. The power converter 110 operates in the SR OFF phase. The detailed operating principle will be discussed below with respect to Figure 5. From t3 to t4, Q2 and Q4 are turned on, and Q1 and Q3 are turned off. SR1 is turned on. Energy is stored in the first and second transformers. The power converter 110 operates in the energy storage phase. The detailed operating principle will be discussed below with respect to Figure 6.

In the first pre-charge period, the energy storage phase occurs from t3 to t4. Ø1 is from t1 to t2. As shown in Figure 3, the duration from t1 to t2 is equal to the duration from t3 to t4. By reducing Ø1, the stored energy is reduced, which in turn decreases di/dt. For this reason, Ø2 is greater than Ø1, and Ø3 is greater than Ø2.

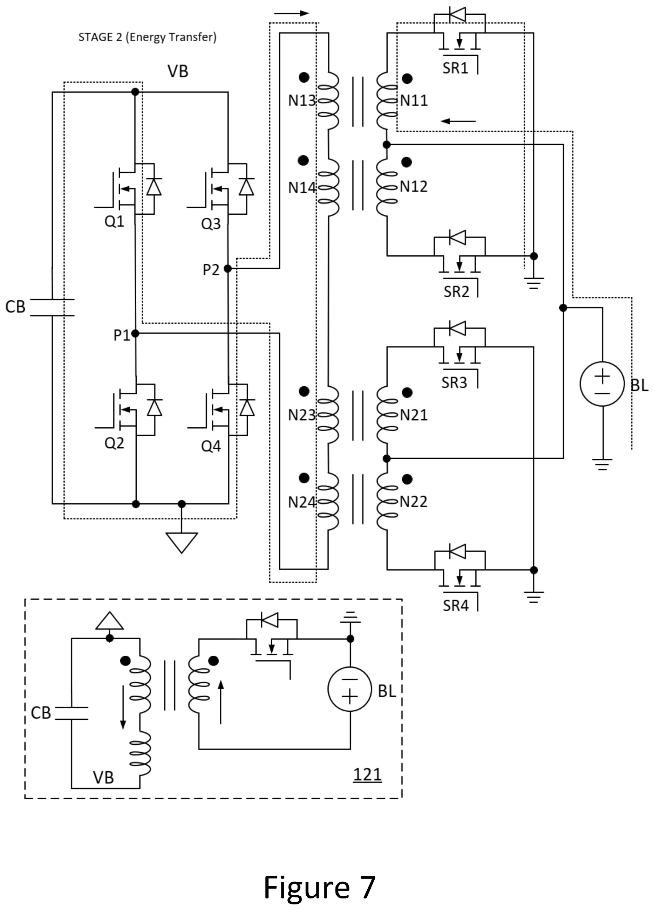

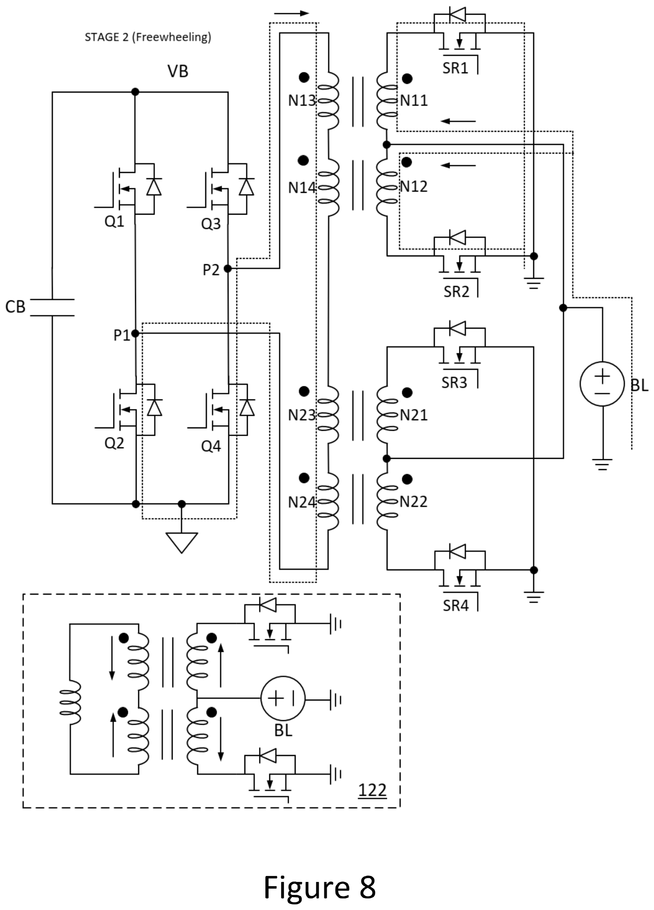

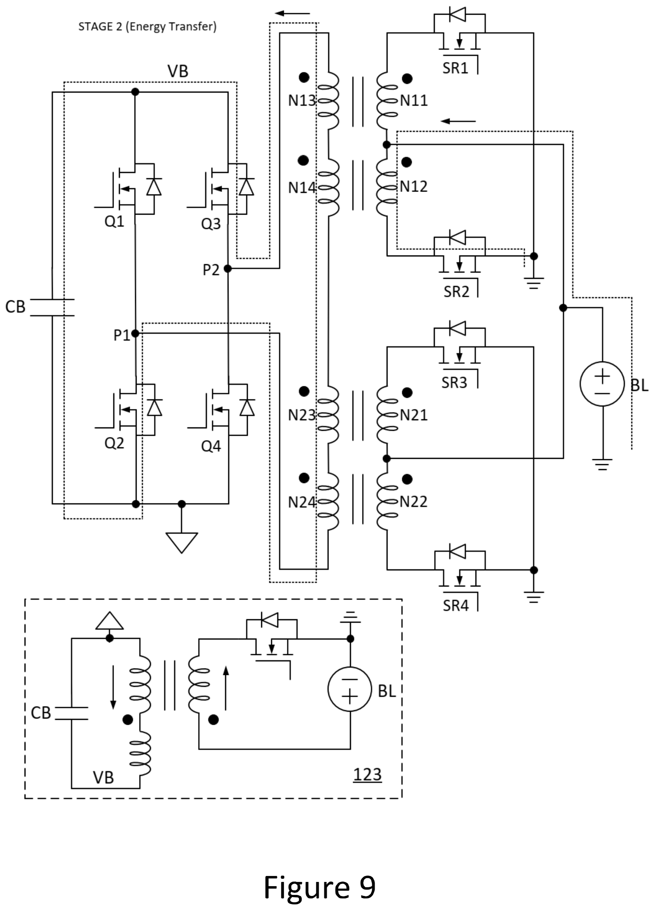

In the second pre-charge period, the first rectifying switch SR1 and the second rectifying switch SR2 are activated. According to the on/off configuration of Q1-Q4 and SR1-SR2, the power converter 110 operates in three different phases, namely a first energy transfer phase, a freewheeling phase and a second energy transfer phase. From t7 to t8, Q1 and Q4 are turned on, and Q2 and Q3 are turned off. SR1 is turned on. Energy is transferred from the low voltage power source BL to the bulk capacitor CB. The power converter 110 operates in the first energy transfer phase. The detailed operating principle will be discussed below with respect to Figure 7. From t8 to t9, Q1 and Q3 are turned off, and Q2 and Q4 are turned on. SR1 and SR2 are turned on. The power converter 110 operates in the freewheeling phase. The detailed operating principle will be discussed below with respect to Figure 8. From t9 to t10, Q2 and Q3 are turned on, and Q1 and Q4 are turned off. SR2 is turned on. Energy is transferred from the low voltage power source BL to the bulk capacitor CB. The power converter 110 operates in the second energy transfer phase. The detailed operating principle will be discussed below with respect to Figure 9.

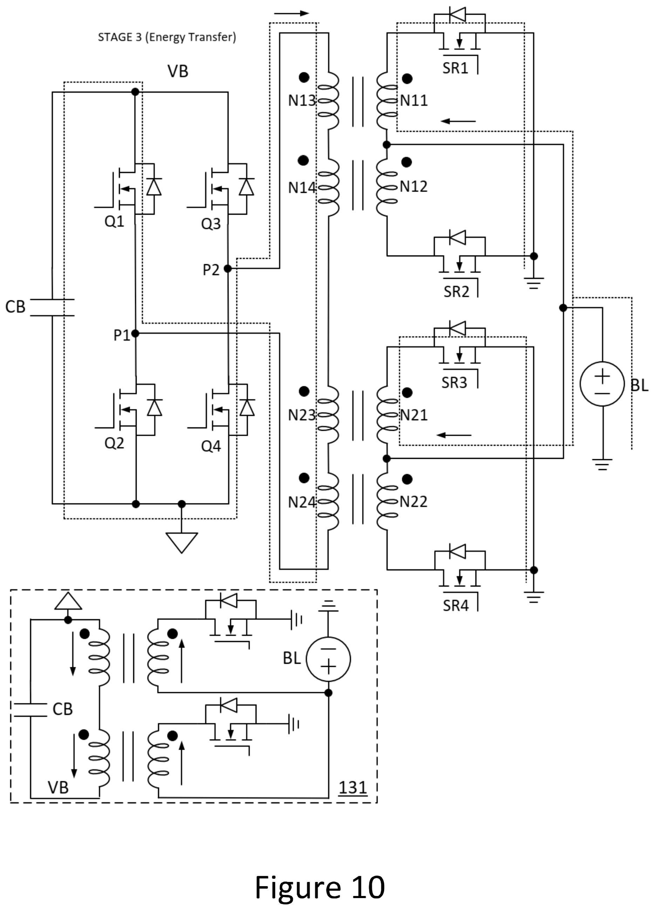

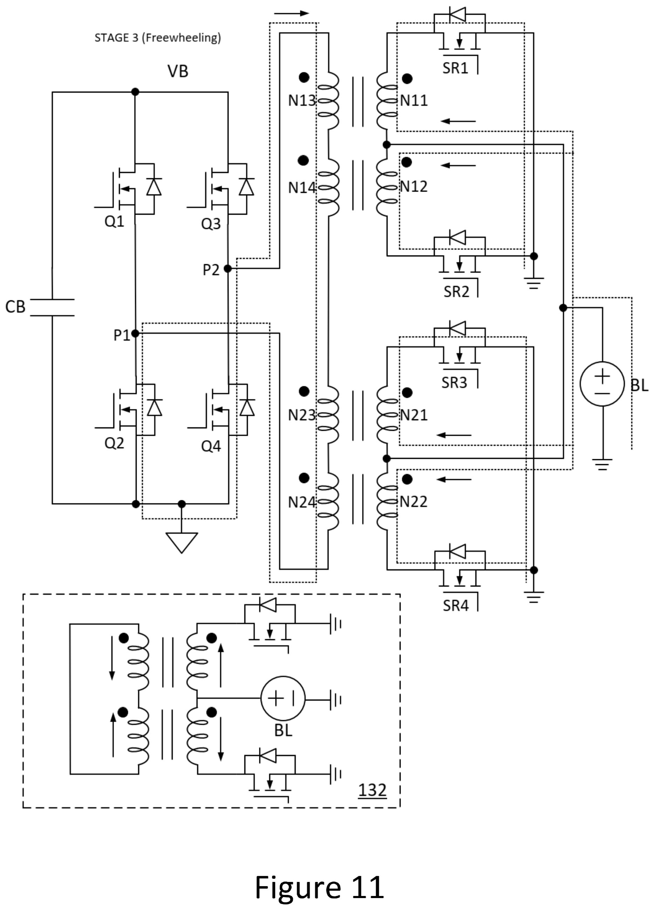

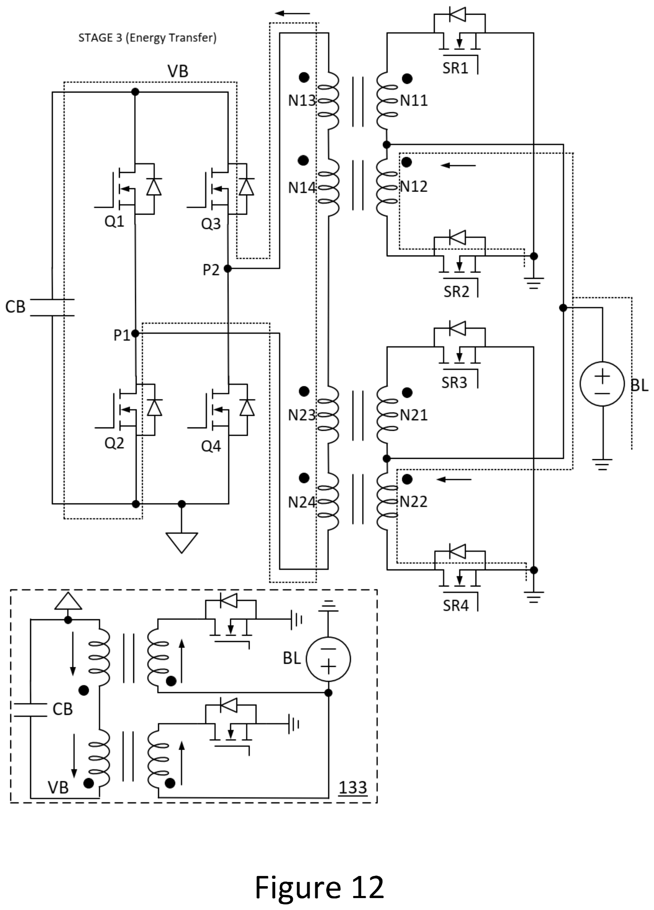

In the third pre-charge period, the first rectifying switch SR1, the second rectifying switch SR2, the third rectifying switch SR3 and the fourth rectifying switch SR4 are activated. According to the on/off configuration of Q1-Q4 and SR1-SR4, the power converter 110 operates in three different phases, namely a first energy transfer phase, a freewheeling phase and a second energy transfer phase. From t15 to t16, Q1 and Q4 are turned on, and Q2 and Q3 are turned off. SR1 and SR3 are turned on. Energy is transferred from the low voltage power source BL to the bulk capacitor CB. The power converter 110 operates in the first energy transfer phase. The detailed operating principle will be discussed below with respect to Figure 10. From t14 to t15, Q1 and Q3 are turned off, and Q2 and Q4 are turned on. SR1, SR2, SR3 and SR4 are turned on. The power converter 110 operates in the freewheeling phase. The detailed operating principle will be discussed below with respect to Figure 11. From t13 to t14, Q2 and Q3 are turned on, and Q1 and Q4 are turned off. SR2 and SR4 are turned on. Energy is transferred from the low voltage power source BL to the bulk capacitor CB. The power converter 110 operates in the second energy transfer phase. The detailed operating principle will be discussed below with respect to Figure 12.

Figure 4 illustrates the operating principle and corresponding equivalent circuit of the power converter when configured to operate in the energy transfer phase of the first pre-charge period in accordance with various embodiments of the present disclosure. As indicated by the dotted lines and arrows in Figure 4, Q1 and Q4 are turned on, and Q2 and Q3 are turned off. SR1 is turned on. On the secondary side, a secondary current flows from the low voltage power source BL to ground through the first secondary winding N11 and SR1. On the primary side, a primary current flows through the primary windings N13, N14, N23 and N24 to charge the bulk capacitor CB through the turned-on Q1 and Q4.

An equivalent circuit is illustrated in the dashed rectangle 111. Since SR3 and SR4 are turned off, the primary windings N23 and N24 of the second transformer function as an inductor connected in series with the primary windings N13 and N14 of the first transformer. In operation, the inductor provides a boost function to further charge the bulk capacitor CB.

Figure 5 illustrates the operating principle and corresponding equivalent circuit of the power converter when configured to operate in the SR OFF phase of the first pre-charge period in accordance with various embodiments of the present disclosure. As indicated by the dotted lines and arrows in Figure 5, Q1 and Q4 are turned off, and Q2 and Q3 are turned on. SR1 is turned off. On the primary side, a primary current flows through the primary windings N13, N14, N23 and N24, the turned-on Q2, the bulk capacitor CB and the turned-on Q3. An equivalent circuit is illustrated in the dashed rectangle 112.

Figure 6 illustrates the operating principle and corresponding equivalent circuit of the power converter when configured to operate in the energy storage phase of the first pre-charge period in accordance with various embodiments of the present disclosure. As indicated by the dotted lines and arrows in Figure 6, Q1 and Q3 are turned off, and Q2 and Q4 are turned on. SR1 is turned on. On the secondary side, a secondary current flows from the low voltage power source BL to ground through the first secondary winding N11 and SR1. On the primary side, a primary current flows through the primary windings N13, N14, N23 and N24, and the turned-on Q2 and Q4.

An equivalent circuit is illustrated in the dashed rectangle 113. Since SR3 and SR4 are turned off, the primary windings N23 and N24 of the second transformer function as an inductor connected in series with the primary windings N13 and N14 of the first transformer. In operation, the energy is stored in the inductor in the energy storage phase shown in Figure 6, and the inductor provides the boost function to further charge the bulk capacitor CB in the energy transfer phase shown in Figure 4.

Figure 7 illustrates the operating principle and corresponding equivalent circuit of the power converter when configured to operate in the first energy transfer phase of the second pre-charge period in accordance with various embodiments of the present disclosure. As indicated by the dotted lines and arrows in Figure 7, Q1 and Q4 are turned on, and Q2 and Q3 are turned off. SR1 is turned on. On the secondary side, a secondary current flows from the low voltage power source BL to ground through the first secondary winding N11 and SR1. On the primary side, a primary current flows through the primary windings N13, N14, N23 and N24 to charge the bulk capacitor CB through the turned-on Q1 and Q4.

An equivalent circuit is illustrated in the dashed rectangle 121. Since SR3 and SR4 are turned off, the primary windings N23 and N24 of the second transformer function as an inductor connected in series with the primary windings N13 and N14 of the first transformer. This inductor helps to reduce di/dt and limit inrush current, thereby reducing voltage stress on the switches (*e.g*., SR1).

Figure 8 illustrates the operating principle and corresponding equivalent circuit of the power converter when configured to operate in the freewheeling phase of the second pre-charge period in accordance with various embodiments of the present disclosure. As indicated by the dotted lines and arrows in Figure 8, Q2 and Q4 are turned on, and Q1 and Q3 are turned off. SR1 and SR2 are turned on. On the secondary side, a first secondary current flows from the low voltage power source BL to ground through the first secondary winding N11 and SR1. A second secondary current flows from the low voltage power source BL to ground through the second secondary winding N12 and SR2. On the primary side, a primary current flows through the primary windings N13, N14, N23 and N24, and the turned-on Q2 and Q4.

An equivalent circuit is illustrated in the dashed rectangle 122. Since SR3 and SR4 are turned off, the primary windings N23 and N24 of the second transformer function as an inductor connected in series with the primary windings N13 and N14 of the first transformer. During the freewheeling phase, the transformer winding voltage is clamped to zero, while the primary current continues to circulate through the turned-on Q2 and Q4.

Figure 9 illustrates the operating principle and corresponding equivalent circuit of the power converter when configured to operate in the second energy transfer phase of the second pre-charge period in accordance with various embodiments of the present disclosure. As indicated by the dotted lines and arrows in Figure 9, Q1 and Q4 are turned off, and Q2 and Q3 are turned on. SR2 is turned on. On the secondary side, a secondary current flows from the low voltage power source BL to ground through the second secondary winding N12 and SR2. On the primary side, a primary current flows through the primary windings N13, N14, N23 and N24 to charge the bulk capacitor CB through the turned-on Q2 and Q3.

An equivalent circuit is illustrated in the dashed rectangle 123. Since SR3 and SR4 are turned off, the primary windings N23 and N24 of the second transformer function as an inductor connected in series with the primary windings N13 and N14 of the first transformer. This inductor helps to reduce di/dt and limit inrush current, thereby reducing voltage stress on the switches (*e.g.*, SR1).

Figures 7-9 illustrate the operating principle of the power converter during the second pre-charge period. Unlike the first pre-charge period shown in Figures 4-6, the power converter 110 does not perform a boost function. In some embodiments, the transformer has a turns ratio of 2:1. Because one transformer is active during the second pre-charge period, the overall voltage gain of the power converter is about 2:1.

Figure 10 illustrates the operating principle and corresponding equivalent circuit of the power converter when configured to operate in the first energy transfer phase of the third pre-charge period in accordance with various embodiments of the present disclosure. As indicated by the dotted lines and arrows in Figure 10, Q1 and Q4 are turned on, and Q2 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24 to charge the bulk capacitor CB through the turned-on Q1 and Q4.

An equivalent circuit is illustrated in the dashed rectangle 131. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figure 11 illustrates the operating principle and corresponding equivalent circuit of the power converter when configured to operate in the freewheeling phase of the third pre-charge period in accordance with various embodiments of the present disclosure. As indicated by the dotted lines and arrows in Figure 11, Q2 and Q4 are turned on, and Q1 and Q3 are turned off. SR1, SR2, SR3 and SR4 are turned on. On the secondary side, a first secondary current flows from the low voltage power source BL to ground through the first secondary winding N11 and SR1. A second secondary current flows from the low voltage power source BL to ground through the second secondary winding N12 and SR2. A third secondary current flows from the low voltage power source BL to ground through the first secondary winding N21 and SR3. A fourth secondary current flows from the low voltage power source BL to ground through the second secondary winding N22 and SR4. On the primary side, a primary current flows through the primary windings N13, N14, N23 and N24, and the turned-on Q2 and Q4.

An equivalent circuit is illustrated in the dashed rectangle 132. During the freewheeling phase, the transformer winding voltage is clamped to zero, while the primary current continues to circulate through the turned-on Q2 and Q4.

Figure 12 illustrates the operating principle and corresponding equivalent circuit of the power converter when configured to operate in the second energy transfer phase of the third pre-charge period in accordance with various embodiments of the present disclosure. As indicated by the dotted lines and arrows in Figure 12, Q1 and Q4 are turned off, and Q2 and Q3 are turned on. SR2 and SR4 are turned on. On the secondary side, a first secondary current flows from the low voltage power source BL to ground through the second secondary winding N12 and SR2. A second secondary current flows from the low voltage power source BL to ground through the second secondary winding N22 and SR4. On the primary side, a primary current flows through the primary windings N13, N14, N23 and N24 to charge the bulk capacitor CB through the turned-on Q2 and Q3.

An equivalent circuit is illustrated in the dashed rectangle 133. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figures 10-12 illustrate the operating principle of the power converter during the third pre-charge period. Unlike the first pre-charge period shown in Figures 4-6, the power converter 110 does not perform a boost function. In some embodiments, the transformer has a turns ratio of 2:1. Because two transformers are active during the third pre-charge period, the overall voltage gain of the power converter is about 4:1.

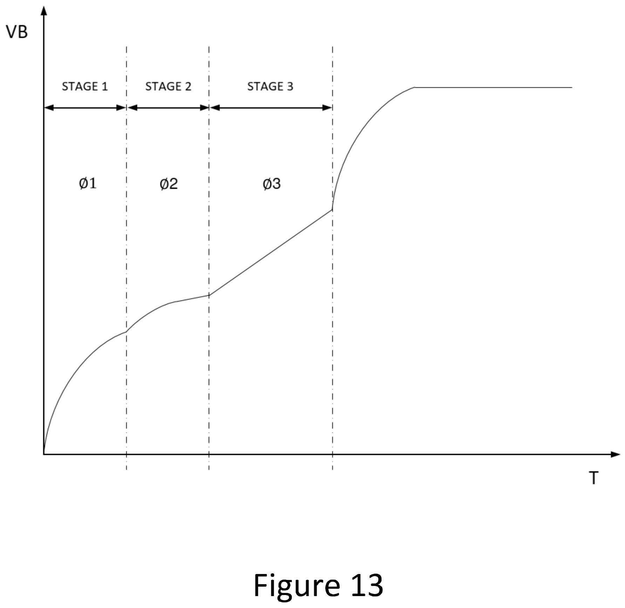

Figure 13 illustrates the pre-charge profile of the bulk capacitor in accordance with various embodiments of the present disclosure. The voltage across the bulk capacitor CB increases in three distinct stages, each corresponding to one of the three pre-charge periods described above with respect to Figures 3-12. The phase shift control scheme is applied to the three pre-charge stages.

In the first stage, the voltage begins to rise from zero at a first controlled curve, providing an initial charging of the bulk capacitor CB while limiting inrush current. In the first stage, the phase shift angle is Ø1 as shown in Figure 13. In the second stage, the voltage continues to increase with a second controlled curve, further raising the capacitor voltage toward the preset bus voltage. In the second stage, the phase shift angle is Ø2 as shown in Figure 13. In the third stage, the voltage rises at a slope to a higher voltage. In the third stage, the phase shift angle is Ø3 as shown in Figure 13. After the third stage, the voltage rises to its final level, completing the charging process and bringing the bulk capacitor voltage substantially equal to the preset voltage bus. In some embodiments, Ø2 is equal to Ø1. Ø3 is greater than Ø2.

Referring back to Figure 2, the power converter architecture illustrated in Figure 2 enables stage-by-stage control of the pre-charge operation. Each stage of the curve reflects the controlled charging in its respective pre-charge period, thereby mitigating inrush current, reducing stress on the power switches, and improving reliability of the power conversion system.

Figure 14 illustrates the operating principle of a second pre-charge control method together with an associated feedback control loop in accordance with various embodiments of the present disclosure. The feedback control loop comprises a filter 302, an error amplifier 304, a proportional-integral control apparatus 300, a subtraction unit 306 and a pulse width modulation (PWM) generator 308. As shown in Figure 14, the voltage Vo across the bulk capacitor CB is fed into an inverting input of the error amplifier 304 through the filter 302. In some embodiments, the filter 302 is a RC filter. A predetermined reference voltage Vref is fed into a non-inverting input of the error amplifier 304. The output (e) of the error amplifier 304 is fed into an input of the proportional-integral control apparatus 300. A predetermined phase shift angle Øₖ is fed into a non-inverting input of the subtraction unit 306. In some embodiments, Øₖ is equal to 90 degrees. An output (u') of the proportional-integral control apparatus is fed into an inverting input of the subtraction unit 306. The output of the subtraction unit 306 is fed into the PWM generator 308. The PWM generator 308 is configured to generate gate drive signals for the primary side bridge, the first rectifier, and the second rectifier.

The feedback control loop shown in Figure 14 is employed to regulate the voltage across the bulk capacitor CB so as to limit overshoot. In operation, the control loop adjusts the drive signals of the switching elements (*e.g*., Q1-Q4) based on the sensed voltage of the bulk capacitor, thereby maintaining a controlled charging profile. This regulation not only suppresses excessive overshoot, but also improves stability and reliability of the pre-charge process.

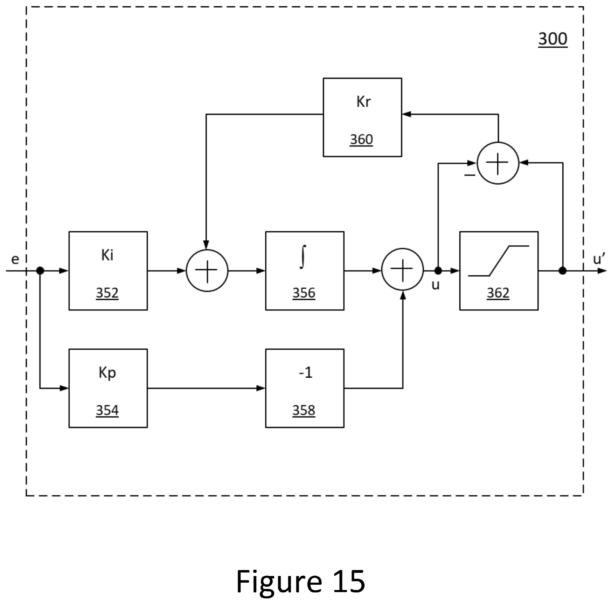

Figure 15 illustrates a block diagram of the proportional-integral control apparatus shown in Figure 14 in accordance with various embodiments of the present disclosure. The proportional-integral control apparatus 300 receives the error signal e and generates an output control signal u'. The proportional-integral control apparatus 300 includes a proportional path and an integral path.

The integral path includes a gain block 352 and an integrator 356. The error signal e is applied to the gain block 352, producing a scaled signal that is summed with a feedback correction signal from the gain block 360, and the result is integrated by the integrator 356 to provide the integral contribution to the control signal u'.

The proportional path includes a gain block 354 that scales the error signal e to generate the proportional contribution. This contribution is inverted by the block 358 and then combined with the output of the integrator 356 at a summing junction to form the preliminary control signal u.

The preliminary control signal u is then applied to a step unit 362, which imposes a defined slope and/or saturation to generate the final control signal u'. The difference (u'-u) is computed at a summing node and applied to the gain block 360. The output of the gain block 360 is fed back into the input summing junction of the integral path, thereby providing an anti-windup mechanism. This configuration prevents integrator windup and ensures smooth, stable control action during pre-charge operation.

In operation, the pre-charge speed of the bulk capacitor CB can be controlled by adjusting the parameters of the proportional-integral control apparatus 300. In some embodiments, the pre-charge time is shortened by increasing the gain (Ki) of the gain block 352.

Figure 16 illustrates a timing diagram of the third pre-charge control method in accordance with various embodiments of the present disclosure. The horizontal axis of Figure 16 represents intervals of time. There are five rows in Figure 16. The first row VPRI represents the voltage between P2 and P1. The second row VGS_SR1 represents the gate drive signal of the first rectifying switch SR1. The third row VGS_SR2 represents the gate drive signal of the second rectifying switch SR2. The fourth row VGS_SR3 represents the gate drive signal of the third rectifying switch SR3. The fifth row VGS_SR4 represents the gate drive signal of the fourth rectifying switch SR4.

In the third pre-charge control method, the pre-charge process includes four pre-charge periods. The pre-charge process starts at t0 and ends at t22. The first pre-charge period is from t0 to t6. The duration of the first pre-charge period is denoted as T1. The first pre-charge period may be alternatively referred to as a first stage (STAGE 1) of the pre-charge process. In the first pre-charge period, a phase shift control scheme is applied to the power converter 110. The phase shift angle is denoted as Ø1. As shown in Figure 16, Ø1 is from t1 to t2. The second pre-charge period is from t6 to t12. The duration of the second pre-charge period is denoted as T2. The second pre-charge period may be alternatively referred to as a second stage (STAGE 2) of the pre-charge process. In the second pre-charge period, the phase shift control scheme is applied to the power converter 110. The phase shift angle is denoted as Ø2. As shown in Figure 16, Ø2 is from t10 to t11. The third pre-charge period is from t12 to t17. The duration of the third pre-charge period is denoted as T3. The third pre-charge period may be alternatively referred to as a third stage (STAGE 3) of the pre-charge process. In the third pre-charge period, the phase shift control scheme is applied to the power converter 110. The phase shift angle is denoted as Ø3. As shown in Figure 16, Ø3 is from t14 to t15. The fourth pre-charge period is from t17 to t22. The fourth pre-charge period may be alternatively referred to as a fourth stage (STAGE 4) of the pre-charge process. In the fourth pre-charge period, the phase shift control scheme is applied to the power converter 110. The phase shift angle is denoted as Ø4. As shown in Figure 16, Ø4 is from t19 to t20.

In some embodiments, T1 is greater than T2. T2 is greater than T3. Ø2 is greater than Ø1. Ø3 is greater than Ø2. Ø4 is greater than Ø3. In alternative embodiments, Ø2 is equal to Ø1. Ø3 is greater than Ø2. Ø4 is greater than Ø3.

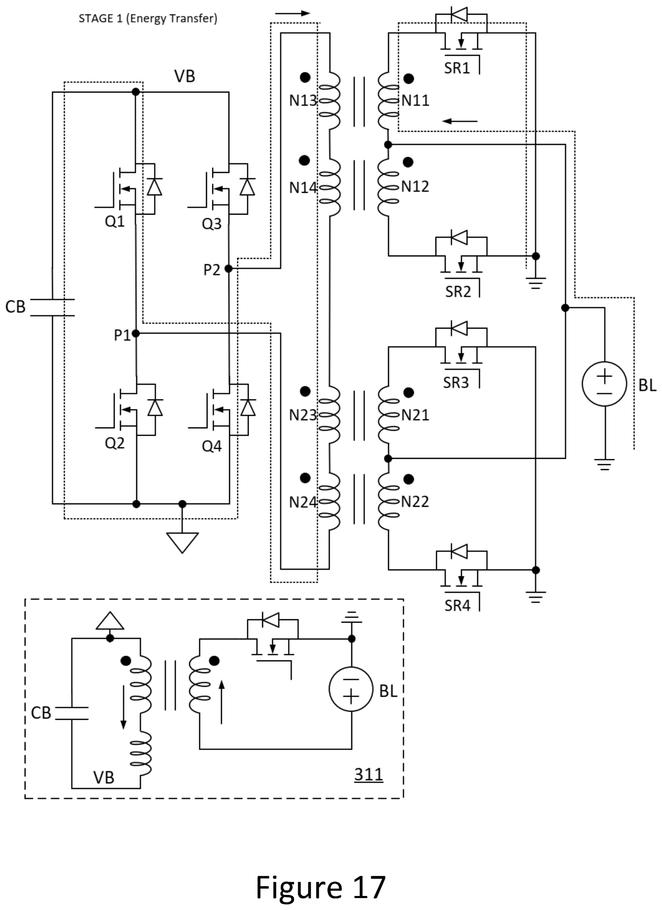

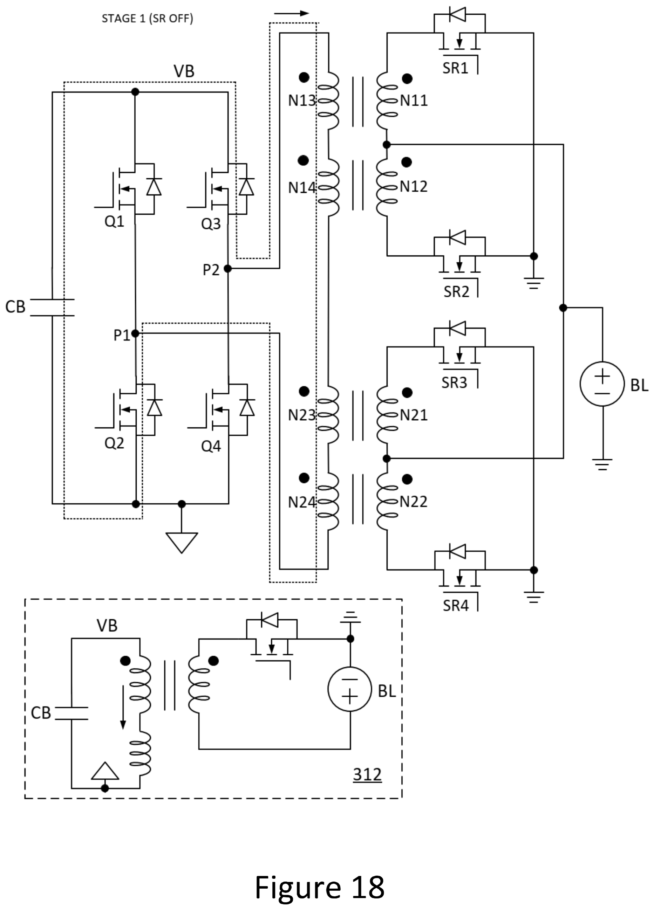

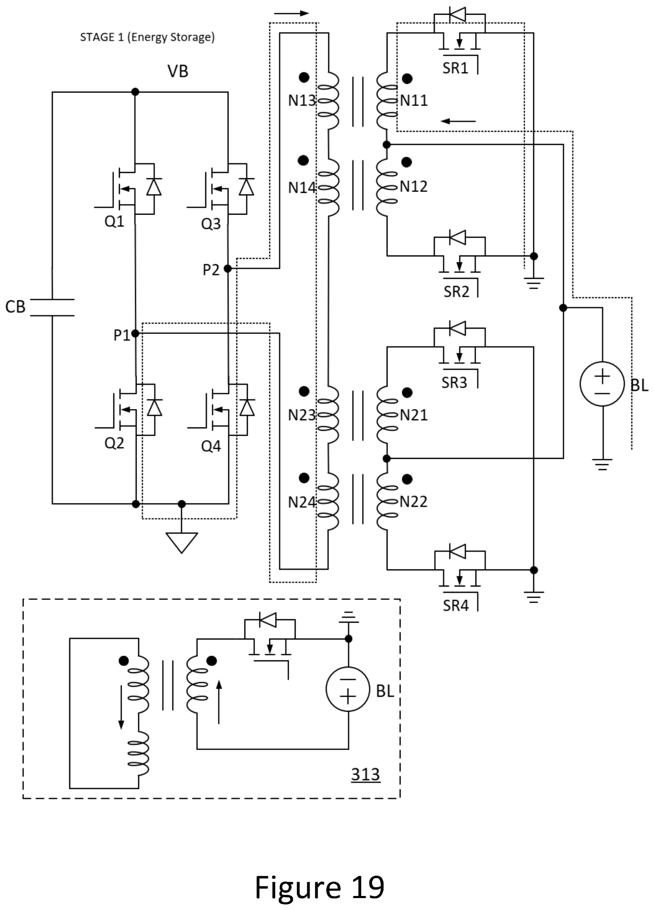

In the first pre-charge period, the first rectifying switch SR1 is activated. According to the on/off configuration of Q1-Q4 and SR1, the power converter 110 operates in three different phases, namely an energy transfer phase, an SR OFF phase and an energy storage phase. From t2 to t3, Q1 and Q4 are turned on, and Q2 and Q3 are turned off. SR1 is turned on. Energy is transferred from the low voltage power source BL to the bulk capacitor CB. The power converter 110 operates in the energy transfer phase. The detailed operating principle will be discussed below with respect to Figure 17. From t4 to t5, Q1 and Q4 are turned off, and Q2 and Q3 are turned on. SR1 is turned off. The power converter 110 operates in the SR OFF phase. The detailed operating principle will be discussed below with respect to Figure 18. From t3 to t4, Q2 and Q4 are turned on, and Q1 and Q3 are turned off. SR1 is turned on. Energy is stored in the first and second transformers. The power converter 110 operates in the energy storage phase. The detailed operating principle will be discussed below with respect to Figure 19.

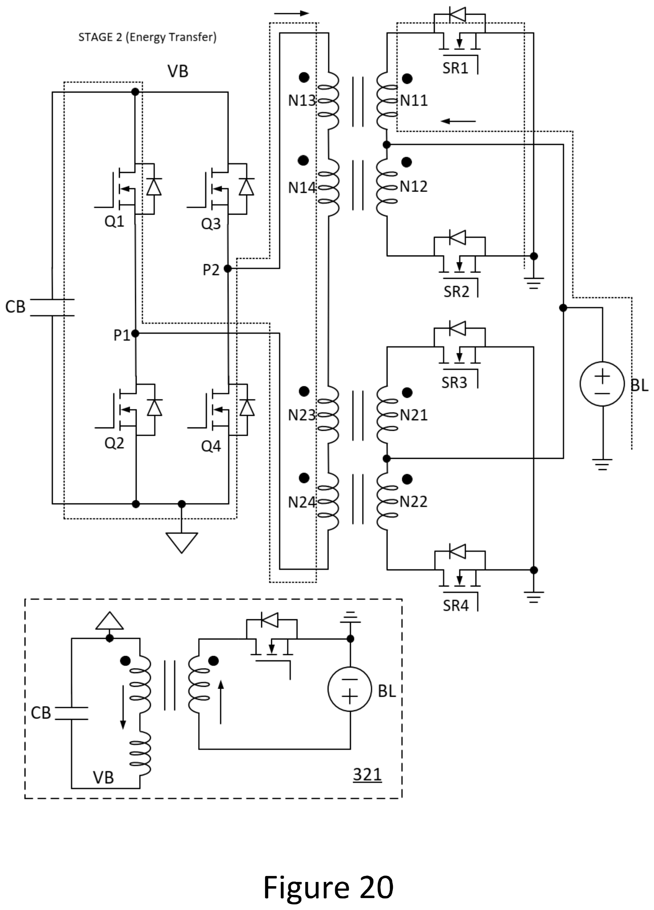

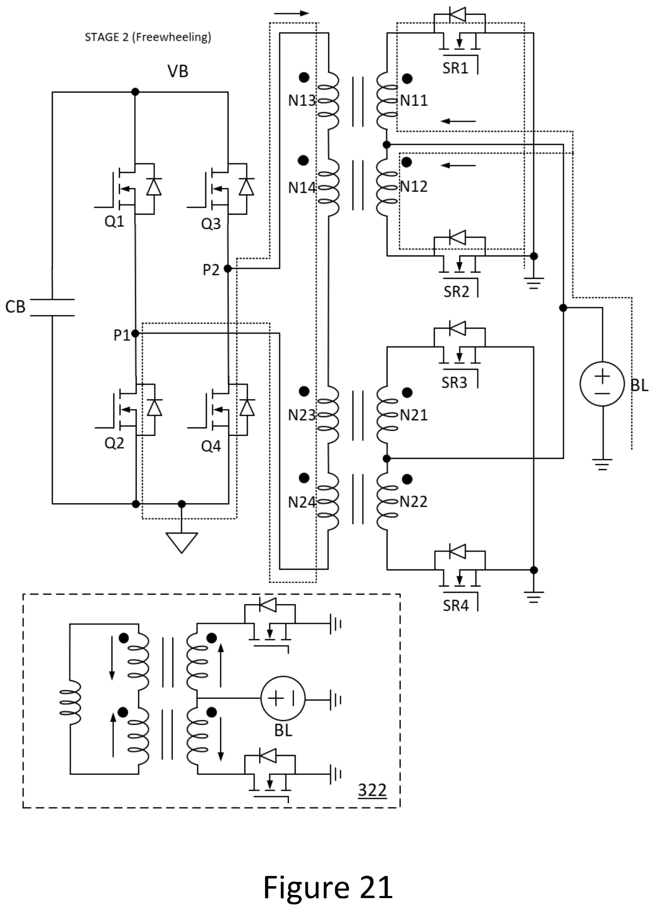

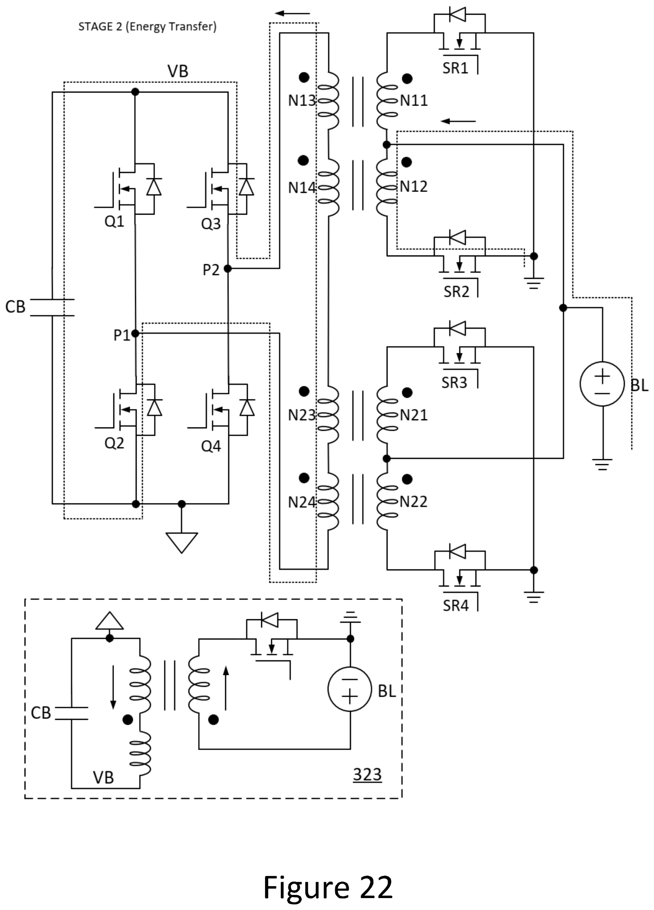

In the second pre-charge period, the first rectifying switch SR1 and the second rectifying switch SR2 are activated. According to the on/off configuration of Q1-Q4 and SR1-SR2, the power converter 110 operates in three different phases, namely a first energy transfer phase, a freewheeling phase and a second energy transfer phase. From t7 to t8, Q1 and Q4 are turned on, and Q2 and Q3 are turned off. SR1 is turned on. Energy is transferred from the low voltage power source BL to the bulk capacitor CB. The power converter 110 operates in the first energy transfer phase. The detailed operating principle will be discussed below with respect to Figure 20. From t8 to t9, Q1 and Q3 are turned off, and Q2 and Q4 are turned on. SR1 and SR2 are turned on. The power converter 110 operates in the freewheeling phase. The detailed operating principle will be discussed below with respect to Figure 21. From t9 to t10, Q2 and Q3 are turned on, and Q1 and Q4 are turned off. SR2 is turned on. Energy is transferred from the low voltage power source BL to the bulk capacitor CB. The power converter 110 operates in the second energy transfer phase. The detailed operating principle will be discussed below with respect to Figure 22.

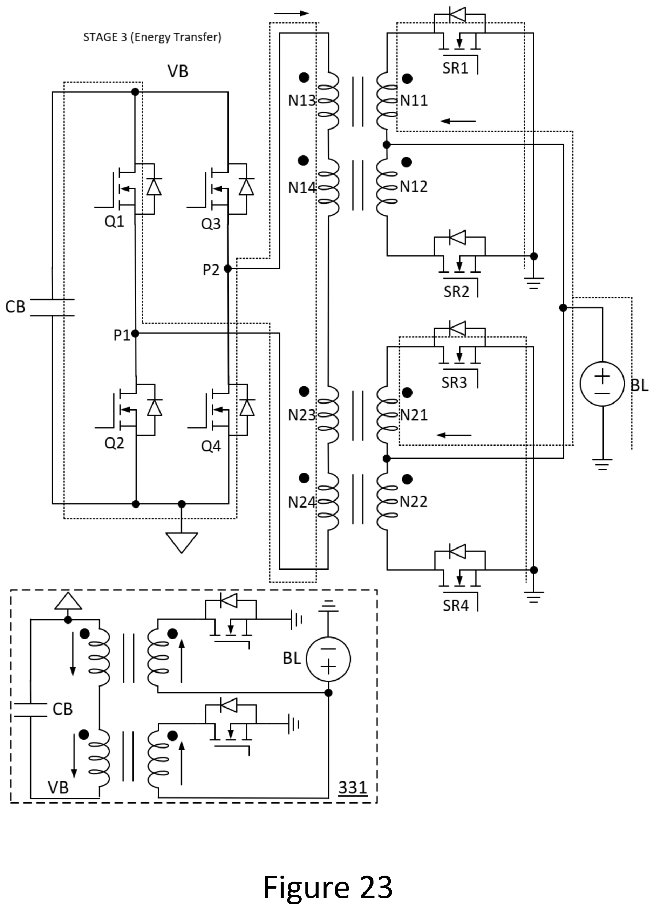

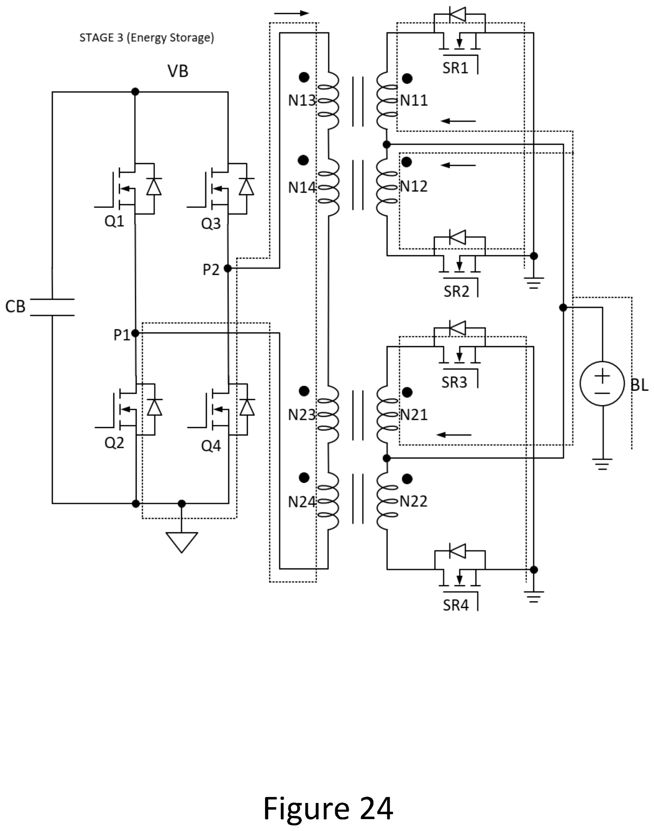

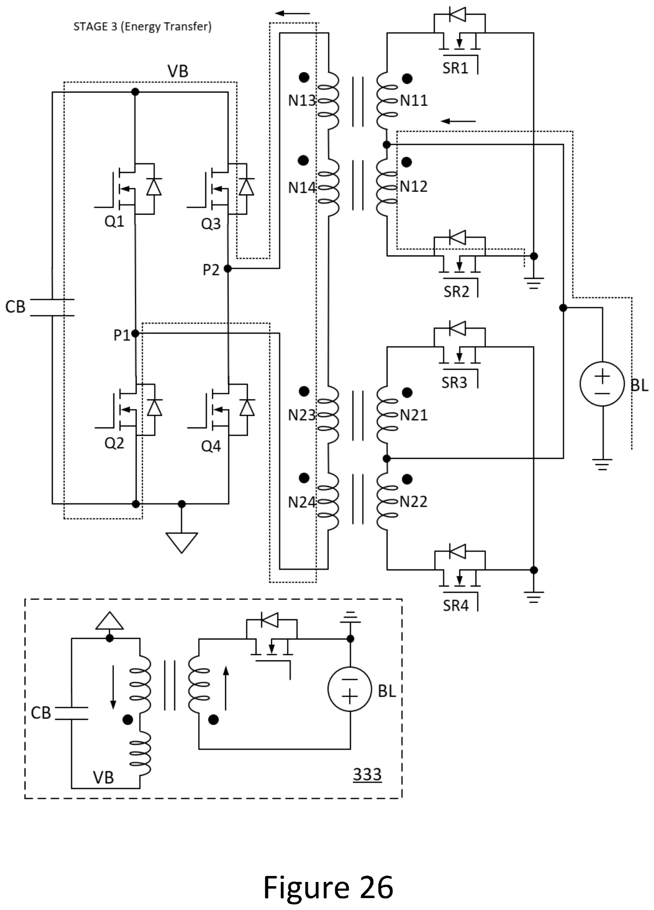

In the third pre-charge period, the first rectifying switch SR1, the second rectifying switch SR2 and the third rectifying switch SR3 are activated. According to the on/off configuration of Q1-Q4 and SR1-SR3, the power converter 110 operates in three different phases, namely a first energy transfer phase, an energy storage phase and a second energy transfer phase. From t15 to t16, Q1 and Q4 are turned on, and Q2 and Q3 are turned off. SR1 and SR3 are turned on. Energy is transferred from the low voltage power source BL to the bulk capacitor CB. The power converter 110 operates in the first energy transfer phase. The detailed operating principle will be discussed below with respect to Figure 23. From t14 to t15, Q1 and Q3 are turned off, and Q2 and Q4 are turned on. SR1, SR2 and SR3 are turned on. The power converter 110 operates in the energy storage phase. The detailed operating principle will be discussed below with respect to Figures 24-25. From t13 to t14, Q2 and Q3 are turned on, and Q1 and Q4 are turned off. SR2 is turned on. Energy is transferred from the low voltage power source BL to the bulk capacitor CB. The power converter 110 operates in the second energy transfer phase. The detailed operating principle will be discussed below with respect to Figure 26.

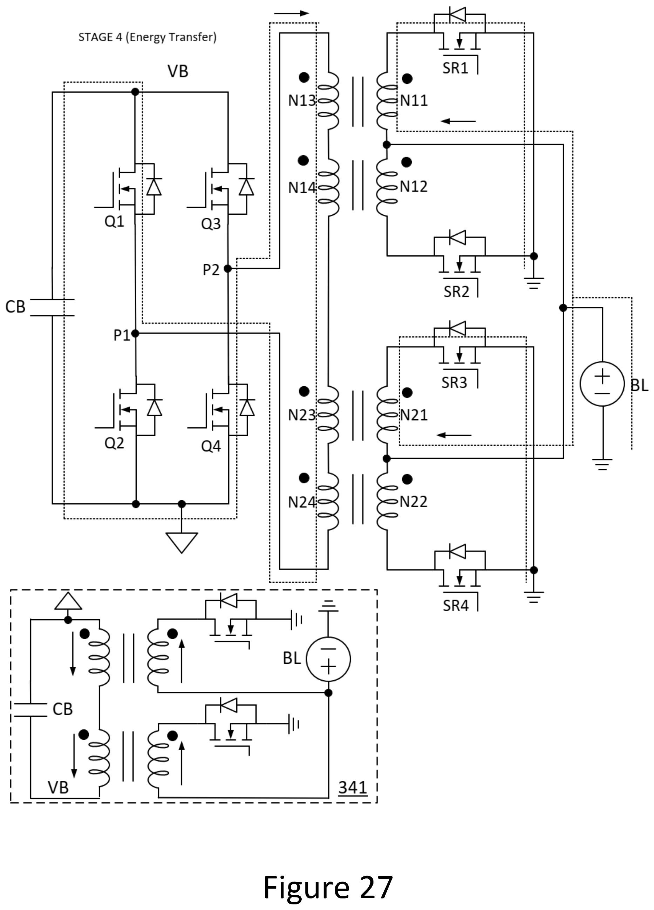

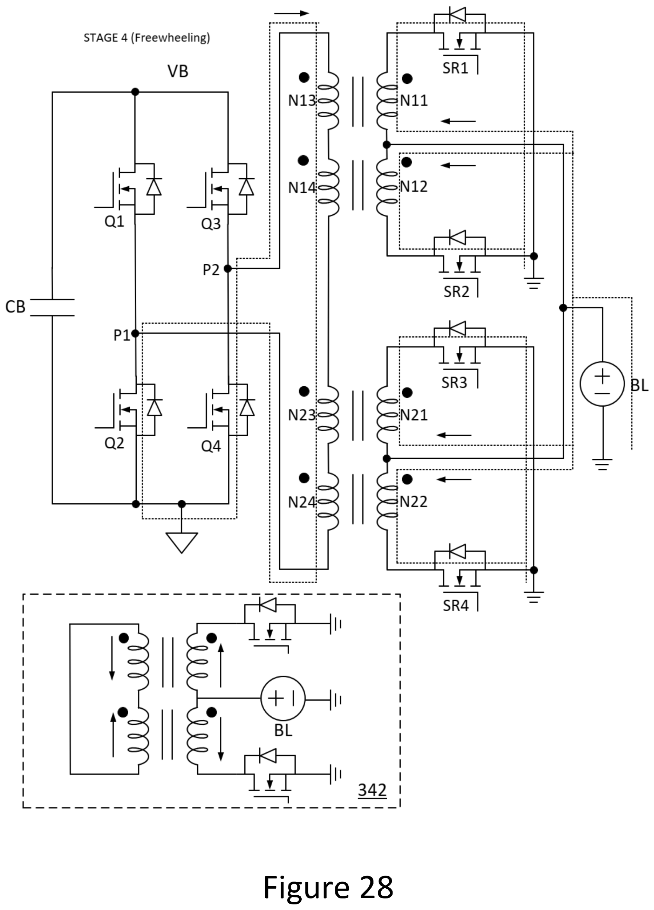

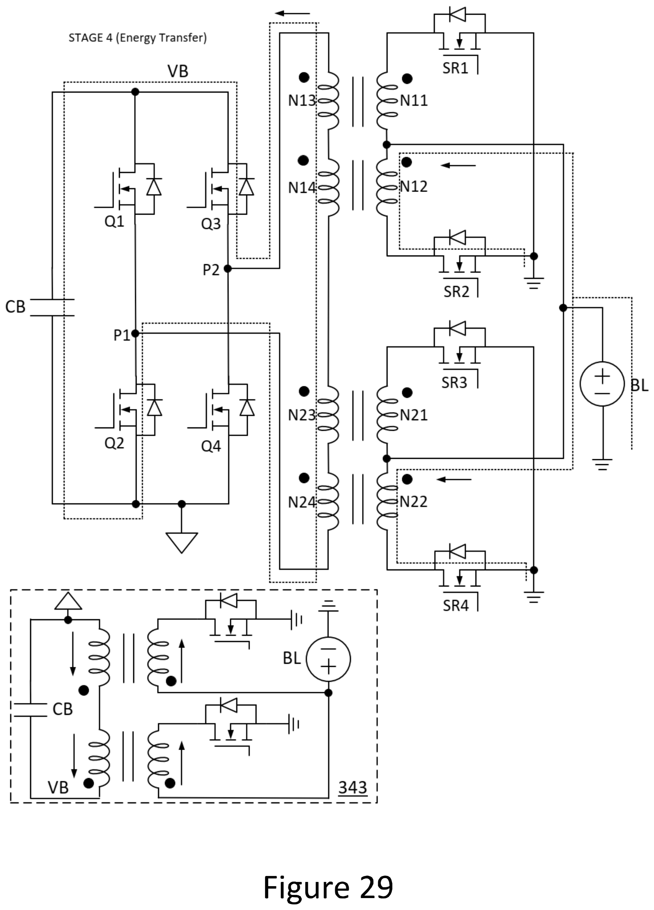

In the fourth pre-charge period, the first rectifying switch SR1, the second rectifying switch SR2, the third rectifying switch SR3 and the fourth rectifying switch SR4 are activated. According to the on/off configuration of Q1-Q4 and SR1-SR4, the power converter 110 operates in three different phases, namely a first energy transfer phase, a freewheeling phase and a second energy transfer phase. From t20 to t21, Q1 and Q4 are turned on, and Q2 and Q3 are turned off. SR1 and SR3 are turned on. Energy is transferred from the low voltage power source BL to the bulk capacitor CB. The power converter 110 operates in the first energy transfer phase. The detailed operating principle will be discussed below with respect to Figure 27. From t19 to t20, Q1 and Q3 are turned off, and Q2 and Q4 are turned on. SR1, SR2, SR3 and SR4 are turned on. The power converter 110 operates in the freewheeling phase. The detailed operating principle will be discussed below with respect to Figure 28. From t18 to t19, Q2 and Q3 are turned on, and Q1 and Q4 are turned off. SR2 and SR4 are turned on. Energy is transferred from the low voltage power source BL to the bulk capacitor CB. The power converter 110 operates in the second energy transfer phase. The detailed operating principle will be discussed below with respect to Figure 29.

Figure 17 illustrates the operating principle and corresponding equivalent circuit of the power converter when configured to operate in the energy transfer phase of the first pre-charge period in accordance with various embodiments of the present disclosure. As indicated by the dotted lines and arrows in Figure 17, Q1 and Q4 are turned on, and Q2 and Q3 are turned off. SR1 is turned on. On the secondary side, a secondary current flows from the low voltage power source BL to ground through the first secondary winding N11 and SR1. On the primary side, a primary current flows through the primary windings N13, N14, N23 and N24 to charge the bulk capacitor CB through the turned-on Q1 and Q4.

An equivalent circuit is illustrated in the dashed rectangle 311. Since SR3 and SR4 are turned off, the primary windings N23 and N24 of the second transformer function as an inductor connected in series with the primary windings N13 and N14 of the first transformer. In operation, the inductor provides a boost function to further charge the bulk capacitor CB.

Figure 18 illustrates the operating principle and corresponding equivalent circuit of the power converter when configured to operate in the SR OFF phase of the first pre-charge period in accordance with various embodiments of the present disclosure. As indicated by the dotted lines and arrows in Figure 18, Q1 and Q4 are turned off, and Q2 and Q3 are turned on. SR1 is turned off. On the primary side, a primary current flows through the primary windings N13, N14, N23 and N24, the turned-on Q2, the bulk capacitor CB and the turned-on Q3. An equivalent circuit is illustrated in the dashed rectangle 312.

Figure 19 illustrates the operating principle and corresponding equivalent circuit of the power converter when configured to operate in the energy storage phase of the first pre-charge period in accordance with various embodiments of the present disclosure. As indicated by the dotted lines and arrows in Figure 19, Q1 and Q3 are turned off, and Q2 and Q4 are turned on. SR1 is turned on. On the secondary side, a secondary current flows from the low voltage power source BL to ground through the first secondary winding N11 and SR1. On the primary side, a primary current flows through the primary windings N13, N14, N23 and N24, and the turned-on Q2 and Q4.

An equivalent circuit is illustrated in the dashed rectangle 313. Since SR3 and SR4 are turned off, the primary windings N23 and N24 of the second transformer function as an inductor connected in series with the primary windings N13 and N14 of the first transformer. In operation, the energy is stored in the inductor in the energy storage phase, and the inductor provides the boost function to further charge the bulk capacitor CB in the energy transfer phase shown in Figure 17.

Figure 20 illustrates the operating principle and corresponding equivalent circuit of the power converter when configured to operate in the first energy transfer phase of the second pre-charge period in accordance with various embodiments of the present disclosure. As indicated by the dotted lines and arrows in Figure 20, Q1 and Q4 are turned on, and Q2 and Q3 are turned off. SR1 is turned on. On the secondary side, a secondary current flows from the low voltage power source BL to ground through the first secondary winding N11 and SR1. On the primary side, a primary current flows through the primary windings N13, N14, N23 and N24 to charge the bulk capacitor CB through the turned-on Q1 and Q4.

An equivalent circuit is illustrated in the dashed rectangle 321. Since SR3 and SR4 are turned off, the primary windings N23 and N24 of the second transformer function as an inductor connected in series with the primary windings N13 and N14 of the first transformer. This inductor helps to reduce di/dt and limit inrush current, thereby reducing voltage stress on the switches (*e.g*., SR1).

Figure 21 illustrates the operating principle and corresponding equivalent circuit of the power converter when configured to operate in the freewheeling phase of the second pre-charge period in accordance with various embodiments of the present disclosure. As indicated by the dotted lines and arrows in Figure 21, Q2 and Q4 are turned on, and Q1 and Q3 are turned off. SR1 and SR2 are turned on. On the secondary side, a first secondary current flows from the low voltage power source BL to ground through the first secondary winding N11 and SR1. A second secondary current flows from the low voltage power source BL to ground through the second secondary winding N12 and SR2. On the primary side, a primary current flows through the primary windings N13, N14, N23 and N24, and the turned-on Q2 and Q4.

An equivalent circuit is illustrated in the dashed rectangle 322. Since SR3 and SR4 are turned off, the primary windings N23 and N24 of the second transformer function as an inductor connected in series with the primary windings N13 and N14 of the first transformer. During the freewheeling phase, the transformer winding voltage is clamped to zero, while the primary current continues to circulate through the turned-on Q2 and Q4.

Figure 22 illustrates the operating principle and corresponding equivalent circuit of the power converter when configured to operate in the second energy transfer phase of the second pre-charge period in accordance with various embodiments of the present disclosure. As indicated by the dotted lines and arrows in Figure 22, Q1 and Q4 are turned off, and Q2 and Q3 are turned on. SR2 is turned on. On the secondary side, a secondary current flows from the low voltage power source BL to ground through the second secondary winding N12 and SR2. On the primary side, a primary current flows through the primary windings N13, N14, N23 and N24 to charge the bulk capacitor CB through the turned-on Q2 and Q3.

An equivalent circuit is illustrated in the dashed rectangle 323. Since SR3 and SR4 are turned off, the primary windings N23 and N24 of the second transformer function as an inductor connected in series with the primary windings N13 and N14 of the first transformer. This inductor helps to reduce di/dt and limit inrush current, thereby reducing voltage stress on the switches (*e.g*., SR1).

Figures 20-22 illustrate the operating principle of the power converter during the second pre-charge period. Unlike the first pre-charge period shown in Figures 17-19, the power converter 110 does not perform a boost function. In some embodiments, the transformer has a turns ratio of 2:1. Because one transformer is active during the second pre-charge period, the overall voltage gain of the power converter is about 2:1.

Figure 23 illustrates the operating principle and corresponding equivalent circuit of the power converter when configured to operate in the first energy transfer phase of the third pre-charge period in accordance with various embodiments of the present disclosure. As indicated by the dotted lines and arrows in Figure 23, Q1 and Q4 are turned on, and Q2 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24 to charge the bulk capacitor CB through the turned-on Q1 and Q4. An equivalent circuit is illustrated in the dashed rectangle 331.

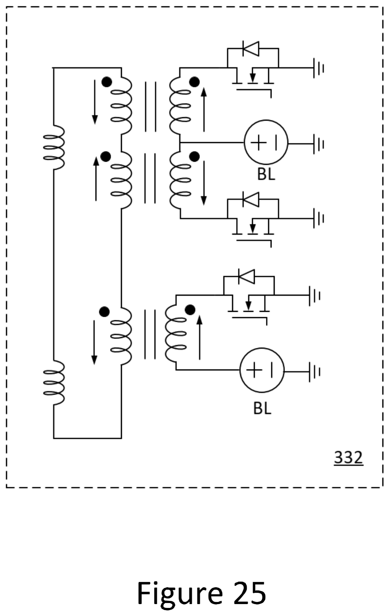

Figure 24 illustrates the operating principle of the power converter when configured to operate in the energy storage phase of the third pre-charge period in accordance with various embodiments of the present disclosure. Figure 25 illustrates the corresponding equivalent circuit of the power converter when configured to operate in the energy storage phase of the third pre-charge period in accordance with various embodiments of the present disclosure.

As indicated by the dotted lines and arrows in Figure 24, Q2 and Q4 are turned on, and Q1 and Q3 are turned off. SR1, SR2 and SR3 are turned on. On the secondary side, a first secondary current flows from the low voltage power source BL to ground through the first secondary winding N11 and SR1. A second secondary current flows from the low voltage power source BL to ground through the second secondary winding N12 and SR2. A third secondary current flows from the low voltage power source BL to ground through the first secondary winding N21 and SR3. On the primary side, a primary current flows through the primary windings N13, N14, N23 and N24, and the turned-on Q2 and Q4.

An equivalent circuit is illustrated in the dashed rectangle 332 in Figure 25. Since both transformers are functional, leakage inductances are connected in series with the primary windings.

Figure 26 illustrates the operating principle and corresponding equivalent circuit of the power converter when configured to operate in the second energy transfer phase of the third pre-charge period in accordance with various embodiments of the present disclosure. As indicated by the dotted lines and arrows in Figure 26, Q1 and Q4 are turned off, and Q2 and Q3 are turned on. SR2 is turned on. On the secondary side, a secondary current flows from the low voltage power source BL to ground through the second secondary winding N12 and SR2. On the primary side, a primary current flows through the primary windings N13, N14, N23 and N24 to charge the bulk capacitor CB through the turned-on Q2 and Q3. An equivalent circuit is illustrated in the dashed rectangle 333.

Figures 23-26 illustrate the operating principle of the power converter during the third pre-charge period. Unlike the first pre-charge period shown in Figures 17-19, the power converter 110 does not perform a boost function. In some embodiments, the transformer has a turns ratio of 2:1. Because two transformers are active during the third pre-charge period, the overall voltage gain of the power converter is about 4:1.

Figure 27 illustrates the operating principle and corresponding equivalent circuit of the power converter when configured to operate in the first energy transfer phase of the fourth pre-charge period in accordance with various embodiments of the present disclosure. As indicated by the dotted lines and arrows in Figure 27, Q1 and Q4 are turned on, and Q2 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24 to charge the bulk capacitor CB through the turned-on Q1 and Q4.

An equivalent circuit is illustrated in the dashed rectangle 341. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figure 28 illustrates the operating principle and corresponding equivalent circuit of the power converter when configured to operate in the freewheeling phase of the fourth pre-charge period in accordance with various embodiments of the present disclosure. As indicated by the dotted lines and arrows in Figure 28, Q2 and Q4 are turned on, and Q1 and Q3 are turned off. SR1, SR2, SR3 and SR4 are turned on. On the secondary side, a first secondary current flows from the low voltage power source BL to ground through the first secondary winding N11 and SR1. A second secondary current flows from the low voltage power source BL to ground through the second secondary winding N12 and SR2. A third secondary current flows from the low voltage power source BL to ground through the first secondary winding N21 and SR3. A fourth secondary current flows from the low voltage power source BL to ground through the second secondary winding N22 and SR4. On the primary side, a primary current flows through the primary windings N13, N14, N23 and N24, and the turned-on Q2 and Q4.

An equivalent circuit is illustrated in the dashed rectangle 342. During the freewheeling phase, the transformer winding voltage is clamped to zero, while the primary current continues to circulate through the turned-on Q2 and Q4.

Figure 29 illustrates the operating principle and corresponding equivalent circuit of the power converter when configured to operate in the second energy transfer phase of the fourth pre-charge period in accordance with various embodiments of the present disclosure. As indicated by the dotted lines and arrows in Figure 29, Q1 and Q4 are turned off, and Q2 and Q3 are turned on. SR2 and SR4 are turned on. On the secondary side, a first secondary current flows from the low voltage power source BL to ground through the second secondary winding N12 and SR2. A second secondary current flows from the low voltage power source BL to ground through the second secondary winding N22 and SR4. On the primary side, a primary current flows through the primary windings N13, N14, N23 and N24 to charge the bulk capacitor CB through the turned-on Q2 and Q3.

An equivalent circuit is illustrated in the dashed rectangle 343. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figures 27-29 illustrate the operating principle of the power converter during the fourth pre-charge period. Unlike the first pre-charge period shown in Figures 17-19, the power converter 110 does not perform a boost function. In some embodiments, the transformer has a turns ratio of 2:1. Because two transformers are active during the fourth pre-charge period, the overall voltage gain of the power converter is about 4:1.

Figure 30 illustrates a timing diagram of the fourth pre-charge control method in accordance with various embodiments of the present disclosure. The horizontal axis of Figure 30 represents intervals of time. There are five rows in Figure 30. The first row VPRI represents the voltage between P2 and P1. The second row VGS_SR1 represents the gate drive signal of the first rectifying switch SR1. The third row VGS_SR2 represents the gate drive signal of the second rectifying switch SR2. The fourth row VGS_SR3 represents the gate drive signal of the third rectifying switch SR3. The fifth row VGS_SR4 represents the gate drive signal of the fourth rectifying switch SR4.

In the fourth pre-charge control method, the pre-charge process includes three pre-charge periods. The pre-charge process starts at t0 and ends at t17. The first pre-charge period is from t0 to t6. The duration of the first pre-charge period is denoted as T1. The first pre-charge period may be alternatively referred to as a first stage (STAGE 1) of the pre-charge process. In the first pre-charge period, a phase shift control scheme is applied to the power converter 110. The phase shift angle is denoted as Ø1. As shown in Figure 30, Ø1 is from t1 to t2. The second pre-charge period is from t6 to t12. The duration of the second pre-charge period is denoted as T2. The second pre-charge period may be alternatively referred to as a second stage (STAGE 2) of the pre-charge process. In the second pre-charge period, the phase shift control scheme is applied to the power converter 110. The phase shift angle is denoted as Ø2. As shown in Figure 30, Ø2 is from t10 to t11. The third pre-charge period is from t12 to t17. The third pre-charge period may be alternatively referred to as a third stage (STAGE 3) of the pre-charge process. In the third pre-charge period, the phase shift control scheme is applied to the power converter 110. The phase shift angle is denoted as Ø3. As shown in Figure 30, Ø3 is from t14 to t15.

In some embodiments, T1 is greater than T2. Ø2 is greater than Ø1. Ø3 is greater than Ø2. In alternative embodiments, Ø2 is equal to Ø1. Ø3 is greater than Ø2.

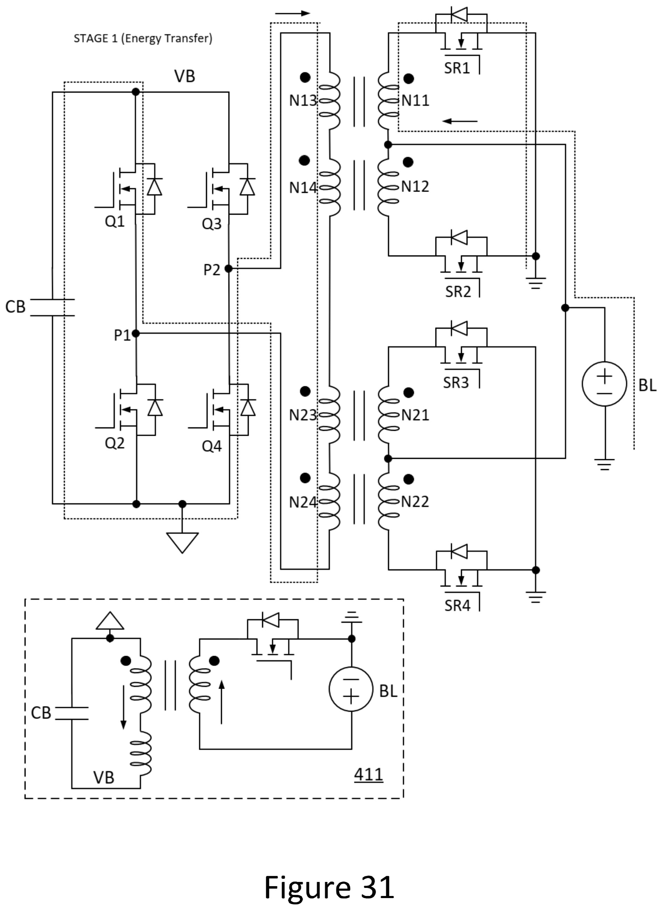

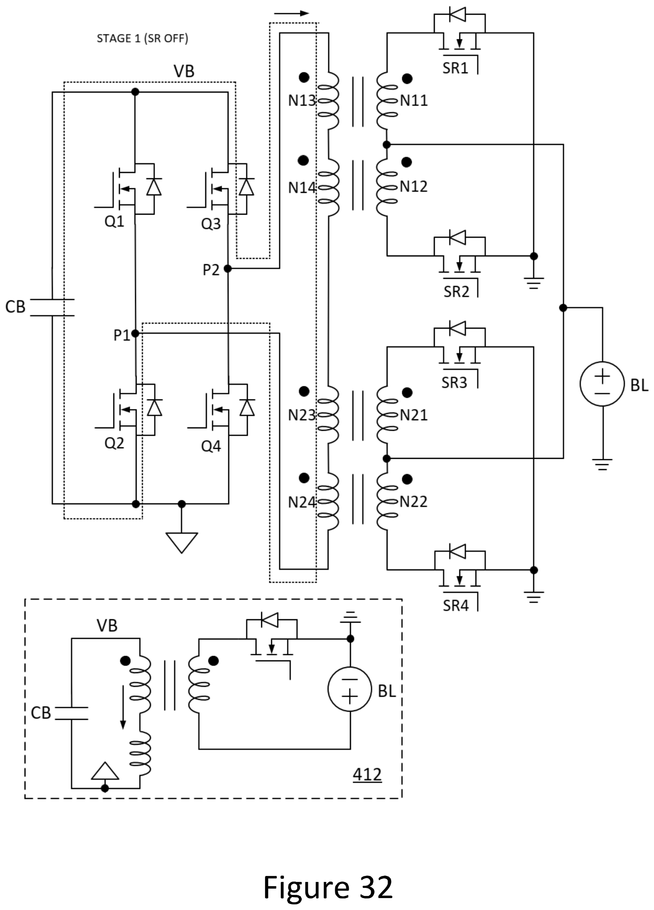

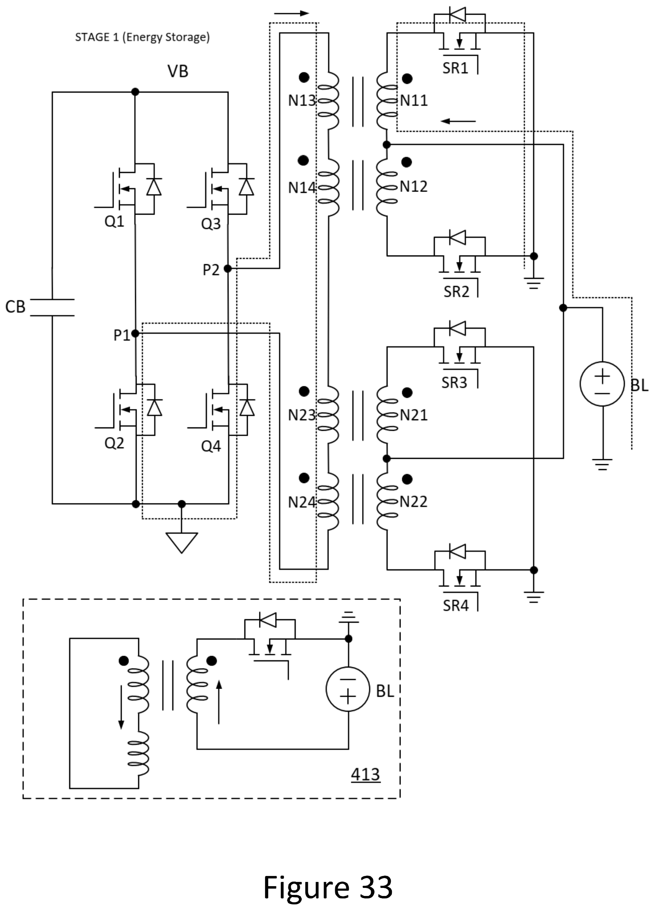

In the first pre-charge period, the first rectifying switch SR1 is activated. According to the on/off configuration of Q1-Q4 and SR1, the power converter 110 operates in three different phases, namely an energy transfer phase, an SR OFF phase and an energy storage phase. From t2 to t3, Q1 and Q4 are turned on, and Q2 and Q3 are turned off. SR1 is turned on. Energy is transferred from the low voltage power source BL to the bulk capacitor CB. The power converter 110 operates in the energy transfer phase. The detailed operating principle will be discussed below with respect to Figure 31. From t4 to t5, Q1 and Q4 are turned off, and Q2 and Q3 are turned on. SR1 is turned off. The power converter 110 operates in the SR OFF phase. The detailed operating principle will be discussed below with respect to Figure 32. From t3 to t4, Q2 and Q4 are turned on, and Q1 and Q3 are turned off. SR1 is turned on. Energy is stored in the first and second transformers. The power converter 110 operates in the energy storage phase. The detailed operating principle will be discussed below with respect to Figure 33.

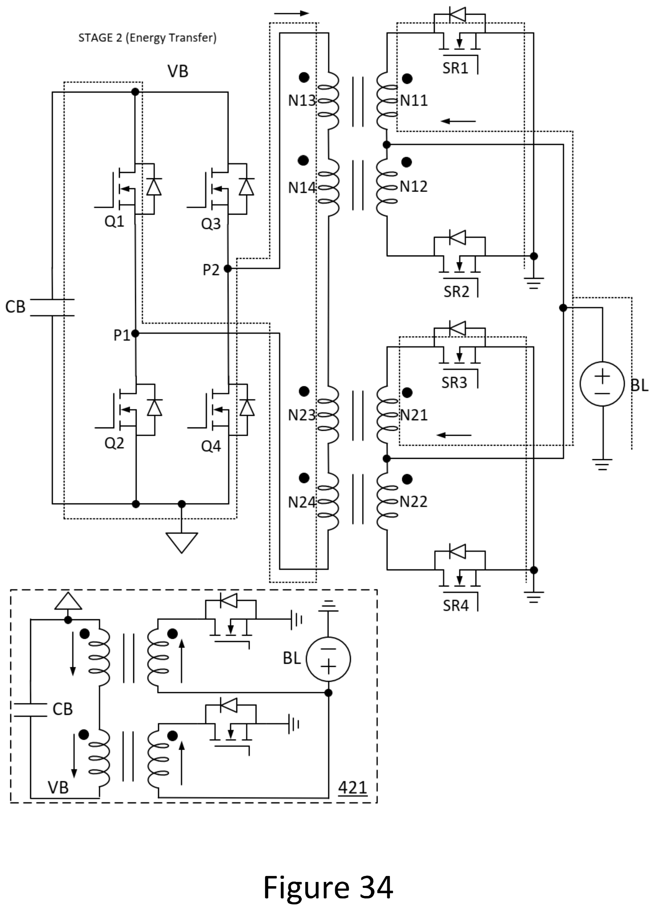

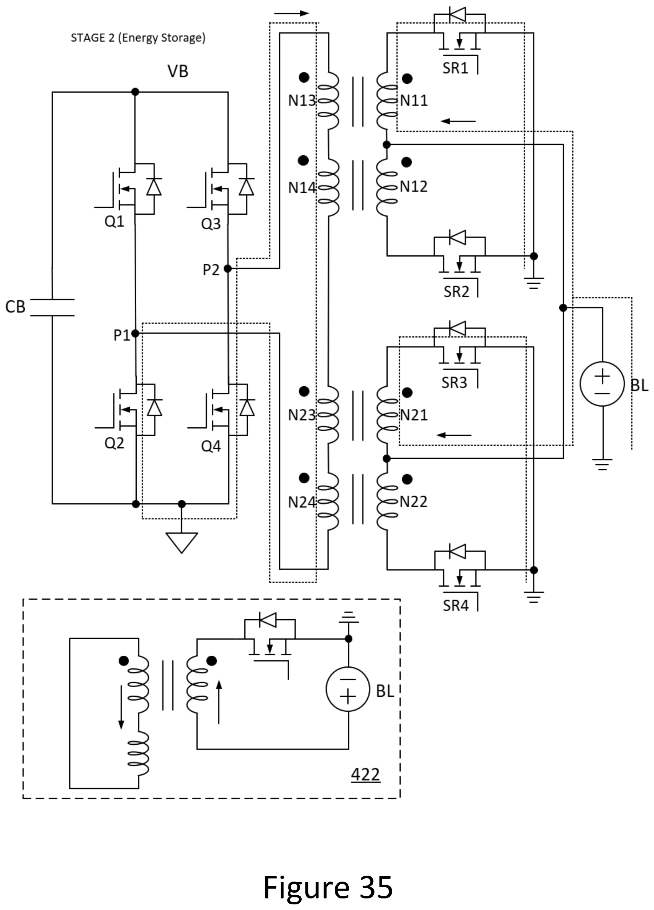

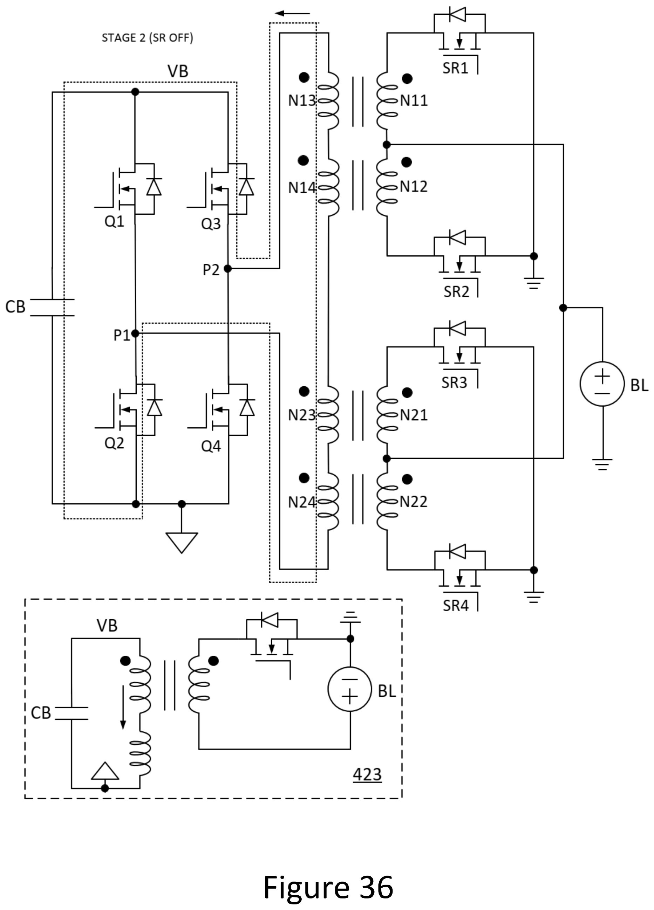

In the second pre-charge period, the first rectifying switch SR1 and the third rectifying switch SR3 are activated. According to the on/off configuration of Q1-Q4 and SR1, SR3, the power converter 110 operates in three different phases, namely an energy transfer phase, an energy storage phase and an SR OFF phase. From t7 to t8, Q1 and Q4 are turned on, and Q2 and Q3 are turned off. SR1 and SR3 are turned on. Energy is transferred from the low voltage power source BL to the bulk capacitor CB. The power converter 110 operates in the energy transfer phase. The detailed operating principle will be discussed below with respect to Figure 34. From t8 to t9, Q1 and Q3 are turned off, and Q2 and Q4 are turned on. SR1 and SR3 are turned on. The power converter 110 operates in the energy storage phase. The detailed operating principle will be discussed below with respect to Figure 35. From t9 to t10, Q2 and Q3 are turned on, and Q1 and Q4 are turned off. Both SR1 and SR3 are turned off. The power converter 110 operates in the SR OFF phase. The detailed operating principle will be discussed below with respect to Figure 36.

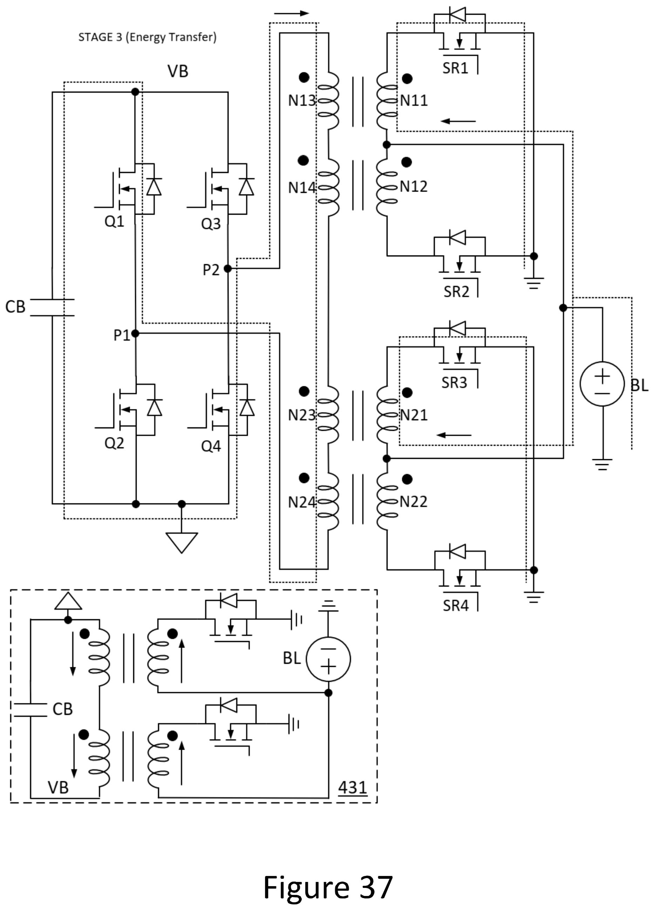

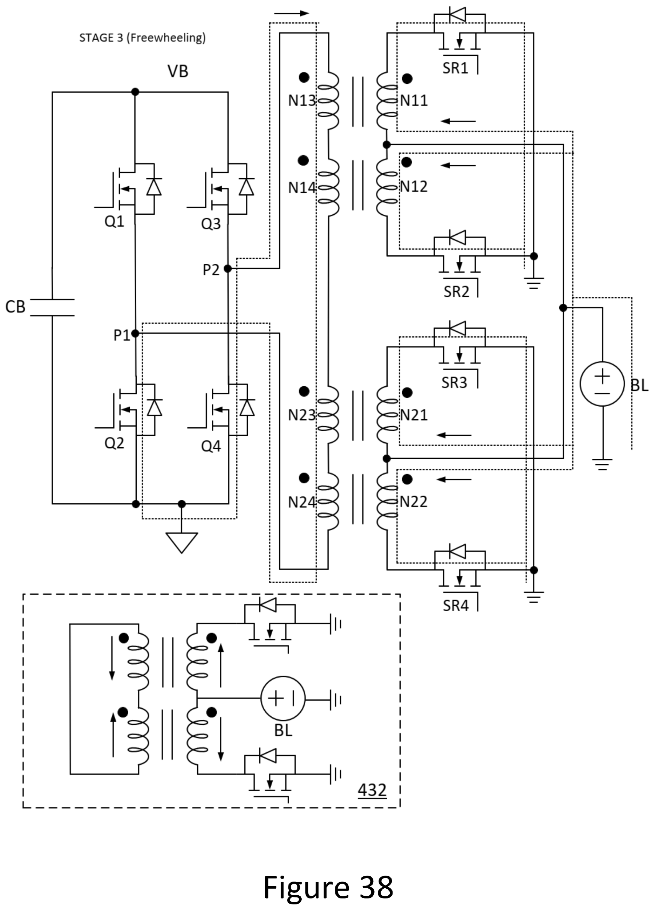

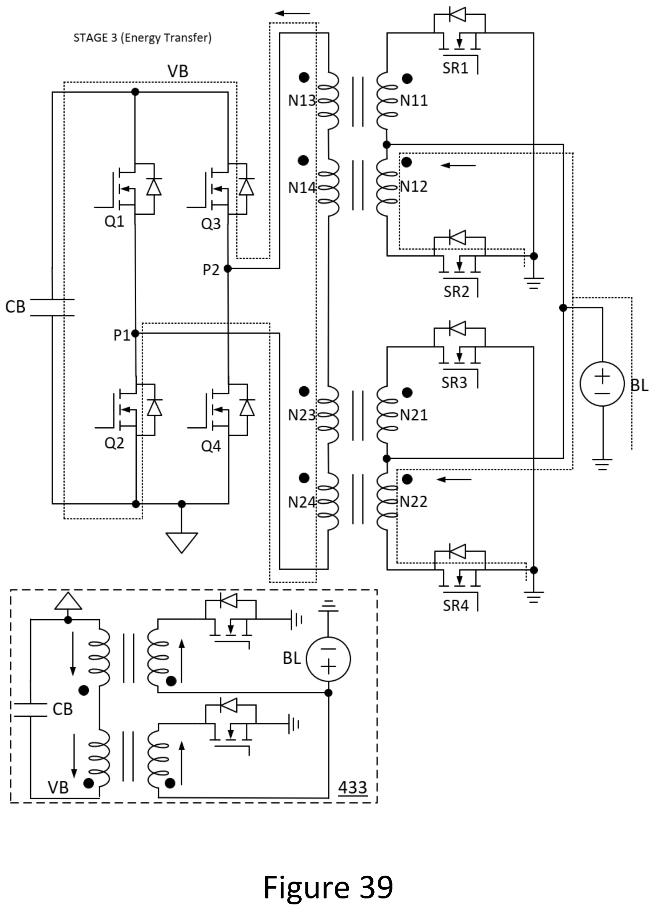

In the third pre-charge period, the first rectifying switch SR1, the second rectifying switch SR2, the third rectifying switch SR3 and the fourth rectifying switch SR4 are activated. According to the on/off configuration of Q1-Q4 and SR1-SR4, the power converter 110 operates in three different phases, namely a first energy transfer phase, a freewheeling phase and a second energy transfer phase. From t15 to t16, Q1 and Q4 are turned on, and Q2 and Q3 are turned off. SR1 and SR3 are turned on. Energy is transferred from the low voltage power source BL to the bulk capacitor CB. The power converter 110 operates in the first energy transfer phase. The detailed operating principle will be discussed below with respect to Figure 37. From t14 to t15, Q1 and Q3 are turned off, and Q2 and Q4 are turned on. SR1, SR2, SR3 and SR4 are turned on. The power converter 110 operates in the freewheeling phase. The detailed operating principle will be discussed below with respect to Figure 38. From t13 to t14, Q2 and Q3 are turned on, and Q1 and Q4 are turned off. SR2 and SR4 are turned on. Energy is transferred from the low voltage power source BL to the bulk capacitor CB. The power converter 110 operates in the second energy transfer phase. The detailed operating principle will be discussed below with respect to Figure 39.

Among the four pre-charge control methods described above, the control method illustrated in Figure 30 exhibits the lowest overshoot. In the second pre-charge period of Figure 30, two rectifying switches are selected from different rectifiers. This arrangement prevents the power converter from performing a boost function, thereby enabling rapid charging of the bulk capacitor. At the same time, the lower portions of the transformers remain inactive, providing additional impedance that helps reduce di/dt.

Figure 31 illustrates the operating principle and corresponding equivalent circuit of the power converter when configured to operate in the energy transfer phase of the first pre-charge period in accordance with various embodiments of the present disclosure. As indicated by the dotted lines and arrows in Figure 31, Q1 and Q4 are turned on, and Q2 and Q3 are turned off. SR1 is turned on. On the secondary side, a secondary current flows from the low voltage power source BL to ground through the first secondary winding N11 and SR1. On the primary side, a primary current flows through the primary windings N13, N14, N23 and N24 to charge the bulk capacitor CB through the turned-on Q1 and Q4.

An equivalent circuit is illustrated in the dashed rectangle 411. Since SR3 and SR4 are turned off, the primary windings N23 and N24 of the second transformer function as an inductor connected in series with the primary windings N13 and N14 of the first transformer. In operation, the inductor provides a boost function to further charge the bulk capacitor CB.

Figure 32 illustrates the operating principle and corresponding equivalent circuit of the power converter when configured to operate in the SR OFF phase of the first pre-charge period in accordance with various embodiments of the present disclosure. As indicated by the dotted lines and arrows in Figure 32, Q1 and Q4 are turned off, and Q2 and Q3 are turned on. SR1 is turned off. On the primary side, a primary current flows through the primary windings N13, N14, N23 and N24, the turned-on Q2, the bulk capacitor CB and the turned-on Q3. An equivalent circuit is illustrated in the dashed rectangle 412.

Figure 33 illustrates the operating principle and corresponding equivalent circuit of the power converter when configured to operate in the energy storage phase of the first pre-charge period in accordance with various embodiments of the present disclosure. As indicated by the dotted lines and arrows in Figure 33, Q1 and Q3 are turned off, and Q2 and Q4 are turned on. SR1 is turned on. On the secondary side, a secondary current flows from the low voltage power source BL to ground through the first secondary winding N11 and SR1. On the primary side, a primary current flows through the primary windings N13, N14, N23 and N24, and the turned-on Q2 and Q4.

An equivalent circuit is illustrated in the dashed rectangle 413. Since SR3 and SR4 are turned off, the primary windings N23 and N24 of the second transformer function as an inductor connected in series with the primary windings N13 and N14 of the first transformer. In operation, the energy is stored in the inductor in the energy storage phase, and the inductor provides the boost function to further charge the bulk capacitor CB in the energy transfer phase shown in Figure 31.

Figure 34 illustrates the operating principle and corresponding equivalent circuit of the power converter when configured to operate in the first energy transfer phase of the second pre-charge period in accordance with various embodiments of the present disclosure. As indicated by the dotted lines and arrows in Figure 34, Q1 and Q4 are turned on, and Q2 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24 to charge the bulk capacitor CB through the turned-on Q1 and Q4. An equivalent circuit is illustrated in the dashed rectangle 421.

Figure 35 illustrates the operating principle and corresponding equivalent circuit of the power converter when configured to operate in the energy storage phase of the second pre-charge period in accordance with various embodiments of the present disclosure. As indicated by the dotted lines and arrows in Figure 35, Q2 and Q4 are turned on, and Q1 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24, and the turned-on Q2 and Q4.

An equivalent circuit is illustrated in the dashed rectangle 422. In this configuration, both transformers operate actively, and do not function as an inductor. The di/dt issue is mitigated by the leakage inductance of the transformers.

Figure 36 illustrates the operating principle and corresponding equivalent circuit of the power converter when configured to operate in the SR OFF phase of the second pre-charge period in accordance with various embodiments of the present disclosure. As indicated by the dotted lines and arrows in Figure 36, Q1 and Q4 are turned off, and Q2 and Q3 are turned on. On the primary side, a primary current flows through the primary windings N13, N14, N23 and N24, the turned-on Q2, the bulk capacitor CB and the turned-on Q3. An equivalent circuit is illustrated in the dashed rectangle 423.

Figures 34-36 illustrate the operating principle of the power converter during the second pre-charge period. Unlike the first pre-charge period shown in Figures 31-33, the power converter 110 does not perform a boost function. In some embodiments, the transformer has a turns ratio of 2:1. Because two transformers are active during the second pre-charge period, the overall voltage gain of the power converter is about 4:1.

Figure 37 illustrates the operating principle and corresponding equivalent circuit of the power converter when configured to operate in the first energy transfer phase of the third pre-charge period in accordance with various embodiments of the present disclosure. As indicated by the dotted lines and arrows in Figure 37, Q1 and Q4 are turned on, and Q2 and Q3 are turned off. SR1 and SR3 are turned on. On the secondary side, a first secondary current flows from the low voltage power source BL to ground through the first secondary winding N11 and SR1. A second secondary current flows from the low voltage power source BL to ground through the first secondary winding N21 and SR3. On the primary side, a primary current flows through the primary windings N13, N14, N23 and N24 to charge the bulk capacitor CB through the turned-on Q1 and Q4.

An equivalent circuit is illustrated in the dashed rectangle 431. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figure 38 illustrates the operating principle and corresponding equivalent circuit of the power converter when configured to operate in the freewheeling phase of the third pre-charge period in accordance with various embodiments of the present disclosure. As indicated by the dotted lines and arrows in Figure 38, Q2 and Q4 are turned on, and Q1 and Q3 are turned off. SR1, SR2, SR3 and SR4 are turned on. On the secondary side, a first secondary current flows from the low voltage power source BL to ground through the first secondary winding N11 and SR1. A second secondary current flows from the low voltage power source BL to ground through the second secondary winding N12 and SR2. A third secondary current flows from the low voltage power source BL to ground through the first secondary winding N21 and SR3. A fourth secondary current flows from the low voltage power source BL to ground through the second secondary winding N22 and SR4. On the primary side, a primary current flows through the primary windings N13, N14, N23 and N24, and the turned-on Q2 and Q4.

An equivalent circuit is illustrated in the dashed rectangle 432. During the freewheeling phase, the transformer winding voltage is clamped to zero, while the primary current continues to circulate through the turned-on Q2 and Q4.

Figure 39 illustrates the operating principle and corresponding equivalent circuit of the power converter when configured to operate in the second energy transfer phase of the third pre-charge period in accordance with various embodiments of the present disclosure. As indicated by the dotted lines and arrows in Figure 39, Q1 and Q4 are turned off, and Q2 and Q3 are turned on. SR2 and SR4 are turned on. On the secondary side, a first secondary current flows from the low voltage power source BL to ground through the second secondary winding N12 and SR2. A second secondary current flows from the low voltage power source BL to ground through the second secondary winding N22 and SR4. On the primary side, a primary current flows through the primary windings N13, N14, N23 and N24 to charge the bulk capacitor CB through the turned-on Q2 and Q3.

An equivalent circuit is illustrated in the dashed rectangle 433. In this configuration, both transformers operate actively, and do not function as an inductor. Because the voltage on the bulk capacitor CB has already been established during the first and second pre-charge periods, the di/dt concern becomes less significant. Any residual di/dt is mitigated by the leakage inductance of the transformers.

Figures 37-39 illustrate the operating principle of the power converter during the third pre-charge period. Unlike the first pre-charge period shown in Figures 31-33, the power converter 110 does not perform a boost function. In some embodiments, the transformer has a turns ratio of 2:1. Because two transformers are active during the third pre-charge period, the overall voltage gain of the power converter is about 4:1.

Figure 40 illustrates a control method of determining the transition between two different pre-charge periods in accordance with various embodiments of the present disclosure. In operation, the controller 200 is capable of determining the transition between two different pre-charge periods through sampling the voltage across the bulk capacitor CB at successive sample times to obtain a current sample and a preceding sample. For example, in the first pre-charge period, the controller 200 obtains Vo[n-1] and Vo[n] at successive sample times. Vo[n-1] is the preceding sample. Vo[n] is the current sample. The controller 200 is able to determine a voltage difference between the current sample Vo[n] and the preceding sample Vo[n-1]. The controller 200 configures the power converter 110 to transition into the second pre-charge period when the voltage difference is less than a predetermined threshold Vth1. Likewise, the controller 200 configures the power converter 110 to transition into the third pre-charge period when the voltage difference is less than a predetermined threshold Vth2.

Figure 41 illustrates a control method of selecting one rectifying switch in a rotating manner to improve the reliability of the power converter in accordance with various embodiments of the present disclosure. As shown in Figure 41, without the pre-charge control methods described above, the voltages across SR1, SR2, SR3 and SR4 are 175 V, 190 V, 179 V and 200 V, respectively. With the pre-charge control methods described above, the voltages across SR1, SR2, SR3 and SR4 are 170 V, 91 V, 89 V and 80 V, respectively. SR1 has a high voltage stress of about 170 V. The controller 200 is capable of selecting one rectifying switch of the rectifying switches of the power converter 110 for activation during the first pre-charge period. The activated rectifying switch is subject to a high voltage during the pre-charge process. To improve reliability, the controller 200 is further capable of rotating the selection of the rectifying switch by activating different rectifying switches in successive pre-charge cycles.

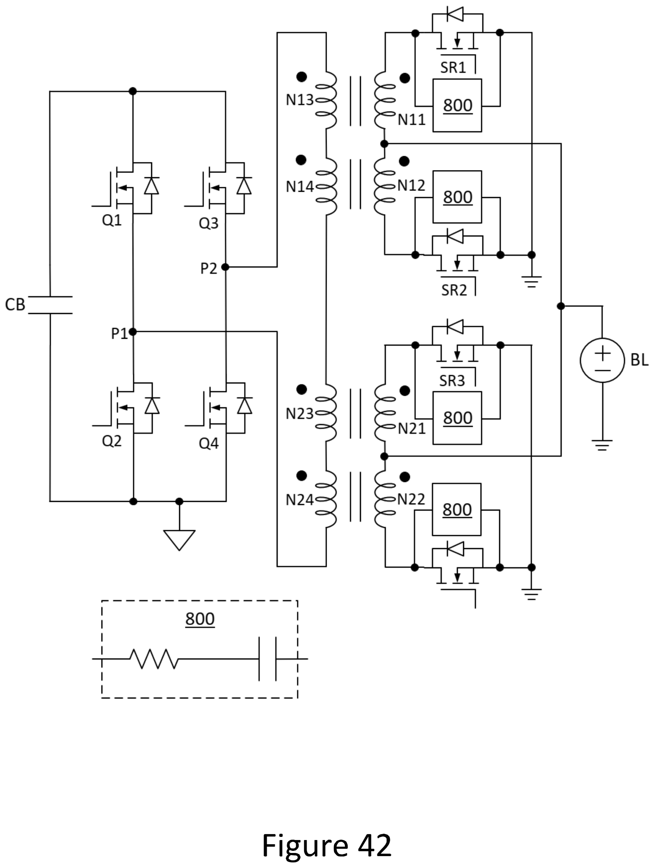

Figure 42 illustrates a schematic diagram of another implementation of the power converter shown in Figure 1 in accordance with various embodiments of the present disclosure. The power converter shown in Figure 42 is similar to that shown in Figure 2 expect that a snubber 800 is added across each rectifying switch to suppress voltage overshoot, ringing, and excessive dv/dt.

As shown in Figure 42, the snubber 800 is formed by a resistor and a capacitor connected in series. In operation, the capacitor absorbs the high-frequency energy from parasitic elements, and the resistor dissipates that energy as heat. One skilled in the art would recognize that the RC snubber shown in Figure 42 is simply one manner of suppressing voltage overshoot and that other and alternate embodiment snubbers could be employed (*e.g.,* a resistor-capacitor-diode snubber, an active clamp snubber, a capacitive snubber, etc.).

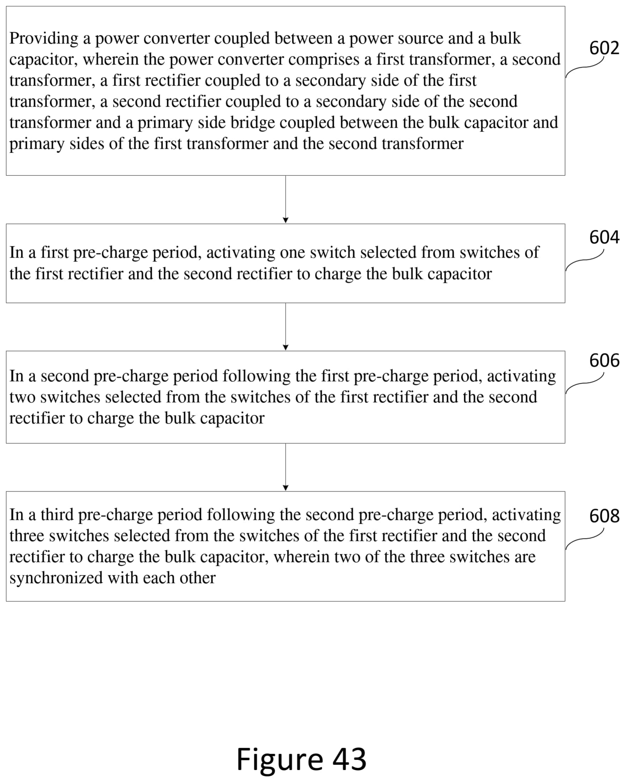

Figure 43 illustrates a flow chart of a control method for pre-charging a bulk capacitor shown in Figure 1 in accordance with various embodiments of the present disclosure. This flowchart shown in Figure 43 is merely an example, which should not unduly limit the scope of the claims. One of ordinary skill in the art would recognize many variations, alternatives, and modifications. For example, various steps illustrated in Figure 43 may be added, removed, replaced, rearranged and repeated.

At step 602, a power converter is provided. The power converter is coupled between a power source and a bulk capacitor, wherein the power converter comprises a first transformer, a second transformer, a first rectifier coupled to a secondary side of the first transformer, a second rectifier coupled to a secondary side of the second transformer and a primary side bridge coupled between the bulk capacitor and primary sides of the first transformer and the second transformer.

At step 604, in a first pre-charge period, one switch is activated to charge the bulk capacitor. The one switch is selected from switches of the first rectifier and the second rectifier.

At step 606, in a second pre-charge period following the first pre-charge period, two switches are activated to charge the bulk capacitor. The two switches are selected from the switches of the first rectifier and the second rectifier.

At step 608, in a third pre-charge period following the second pre-charge period, at least three switches are activated to charge the bulk capacitor. The at least three switches are selected from the switches of the first rectifier and the second rectifier, wherein two of the at least three switches are synchronized with each other.

The primary side bridge comprises a first switch and a second switch connected in series between two terminals of the bulk capacitor, and a third switch and a fourth switch connected in series between the two terminals of the bulk capacitor; a first primary winding and a second primary winding of the first transformer, and a third primary winding and a fourth primary winding of the second transformer are connected in series between a common node of the third switch and the fourth switch, and a common node of the first switch and the second switch; a first secondary winding and a first rectifying switch are connected in series between two terminals of the power source, wherein the first secondary winding is magnetically coupled to the first primary winding; a second secondary winding and a second rectifying switch are connected in series between the two terminals of the power source, wherein the second secondary winding is magnetically coupled to the second primary winding, and wherein the first rectifying switch and the second rectifying switch form the first rectifier, and the first primary winding, the second primary winding, the first secondary winding and the second secondary winding form the first transformer; a third secondary winding and a third rectifying switch are connected in series between the two terminals of the power source, wherein the third secondary winding is magnetically coupled to the third primary winding; and a fourth secondary winding and a fourth rectifying switch are connected in series between the two terminals of the power source, wherein the fourth secondary winding is magnetically coupled to the fourth primary winding, and wherein the third rectifying switch and the fourth rectifying switch form the second rectifier, and the third primary winding, the fourth primary winding, the third secondary winding and the fourth secondary winding form the second transformer.

The method further comprises in the first pre-charge period, activating the first rectifying switch of the first rectifier while controlling the second rectifying switch, the third rectifying switch and the fourth rectifying switch to remain non-conducting, in the second pre-charge period, activating the first rectifying switch and the second rectifying switch of the first rectifier while controlling the third rectifying switch and the fourth rectifying switch to remain non-conducting, and in the third pre-charge period, activating the first rectifying switch and the second rectifying switch of the first rectifier, and the third rectifying switch and the fourth rectifying switch of the second rectifier.

A phase shift angle of the primary side bridge in the second pre-charge period is greater than a phase shift angle of the primary side bridge in the first pre-charge period; and a phase shift angle of the primary side bridge in the third pre-charge period is greater than the phase shift angle of the primary side bridge in the second pre-charge period.

The method further comprises in the first pre-charge period, activating the first rectifying switch of the first rectifier while controlling the second rectifying switch, the third rectifying switch and the fourth rectifying switch to remain non-conducting, in the second pre-charge period, activating the first rectifying switch and the second rectifying switch of the first rectifier while controlling the third rectifying switch and the fourth rectifying switch to remain non-conducting, in the third pre-charge period, activating the first rectifying switch and the second rectifying switch of the first rectifier, and the third rectifying switch of the second rectifier while controlling the fourth rectifying switch to remain non-conducting, and in a fourth pre-charge period following the third pre-charge period, activating the first rectifying switch and the second rectifying switch of the first rectifier, and the third rectifying switch and the fourth rectifying switch of the second rectifier.

A phase shift angle of the primary side bridge in the second pre-charge period is greater than a phase shift angle of the primary side bridge in the first pre-charge period; a phase shift angle of the primary side bridge in the third pre-charge period is greater than the phase shift angle of the primary side bridge in the second pre-charge period; a phase shift angle of the primary side bridge in the fourth pre-charge period is greater than the phase shift angle of the primary side bridge in the third pre-charge period; a duration of the first pre-charge period is greater than a duration of the second pre-charge period; and the duration of the second pre-charge period is greater than a duration of the third pre-charge period.

The method further comprises in the first pre-charge period, activating the first rectifying switch of the first rectifier while controlling the second rectifying switch, the third rectifying switch and the fourth rectifying switch to remain non-conducting, in the second pre-charge period, activating the first rectifying switch of the first rectifier and the third rectifying switch of the second rectifier while controlling the second rectifying switch and the fourth rectifying switch to remain non-conducting, and in the third pre-charge period, activating the first rectifying switch and the second rectifying switch of the first rectifier, and the third rectifying switch and the fourth rectifying switch of the second rectifier.

A phase shift angle of the primary side bridge in the second pre-charge period is greater than a phase shift angle of the primary side bridge in the first pre-charge period; a phase shift angle of the primary side bridge in the third pre-charge period is greater than the phase shift angle of the primary side bridge in the second pre-charge period; and a duration of the first pre-charge period is greater than a duration of the second pre-charge period.

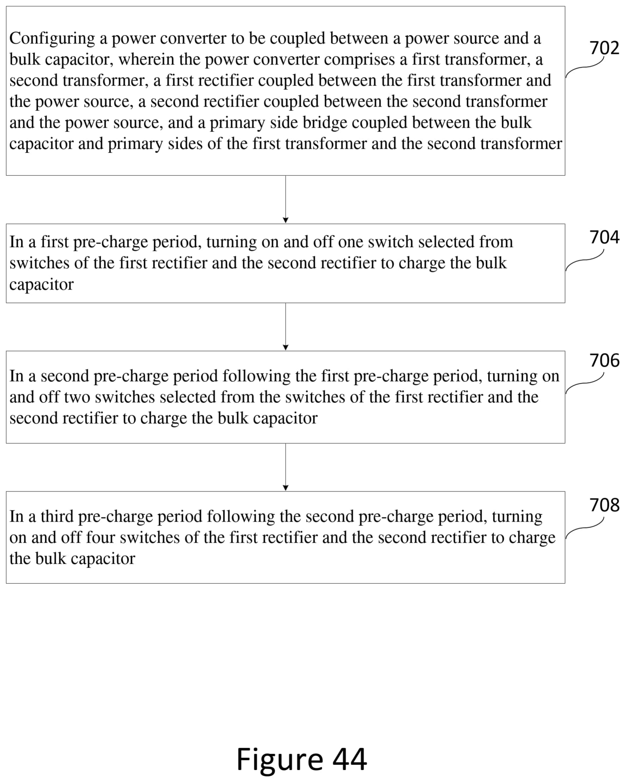

Figure 44 illustrates a flow chart of another control method for pre-charging a bulk capacitor shown in Figure 1 in accordance with various embodiments of the present disclosure. This flowchart shown in Figure 44 is merely an example, which should not unduly limit the scope of the claims. One of ordinary skill in the art would recognize many variations, alternatives, and modifications. For example, various steps illustrated in Figure 44 may be added, removed, replaced, rearranged and repeated.

At step 702, a power converter is configured to be coupled between a power source and a bulk capacitor, wherein the power converter comprises a first transformer, a second transformer, a first rectifier coupled between the first transformer and the power source, a second rectifier coupled between the second transformer and the power source, and a primary side bridge coupled between the bulk capacitor and primary sides of the first transformer and the second transformer.

At step 704, in a first pre-charge period, one switch is turned on and off. The one switch is selected from switches of the first rectifier and the second rectifier to charge the bulk capacitor.

At step 706, in a second pre-charge period following the first pre-charge period, two switches are turned on and off. The two switches are selected from the switches of the first rectifier and the second rectifier to charge the bulk capacitor.

At step 708, in a third pre-charge period following the second pre-charge period, four switches of the first rectifier and the second rectifier are turned on and off to charge the bulk capacitor.

The primary side bridge comprises a first switch and a second switch connected in series between two terminals of the bulk capacitor, and a third switch and a fourth switch connected in series between the two terminals of the bulk capacitor; a first primary winding and a second primary winding of the first transformer, and a third primary winding and a fourth primary winding of the second transformer are connected in series between a common node of the third switch and the fourth switch, and a common node of the first switch and the second switch; a first secondary winding and a first rectifying switch are connected in series between two terminals of the power source, wherein the first secondary winding is magnetically coupled to the first primary winding; a second secondary winding and a second rectifying switch are connected in series between the two terminals of the power source, wherein the second secondary winding is magnetically coupled to the second primary winding, and wherein the first rectifying switch and the second rectifying switch form the first rectifier, and the first primary winding, the second primary winding, the first secondary winding and the second secondary winding form the first transformer; a third secondary winding and a third rectifying switch are connected in series between the two terminals of the power source, wherein the third secondary winding is magnetically coupled to the third primary winding; and a fourth secondary winding and a fourth rectifying switch are connected in series between the two terminals of the power source, wherein the fourth secondary winding is magnetically coupled to the fourth primary winding, and wherein the third rectifying switch and the fourth rectifying switch form the second rectifier, and the third primary winding, the fourth primary winding, the third secondary winding and the fourth secondary winding form the second transformer.

The method further comprises in a first phase of the first pre-charge period, turning on the second switch and the fourth switch of the primary side bridge, and activating the first rectifying switch of the first rectifier to store magnetic energy in the first transformer and the second transformer, and in a second phase of the first pre-charge period, turning on the first switch and the fourth switch of the primary side bridge, and activating the first rectifying switch of the first rectifier to release stored magnetic energy to charge the bulk capacitor.

The method further comprises in a first phase of the second pre-charge period, turning on the second switch and the fourth switch of the primary side bridge, and activating the first rectifying switch of the first rectifier and the third rectifying switch of the second rectifier to store magnetic energy in the first transformer and the second transformer, and in a second phase of the second pre-charge period, turning on the first switch and the fourth switch of the primary side bridge, and activating the first rectifying switch of the first rectifier and the third rectifying switch of the second rectifier to transfer stored magnetic energy to charge the bulk capacitor.

The method further comprises in a first phase of the third pre-charge period, turning on the second switch and the fourth switch of the primary side bridge, and activating the first rectifying switch and the second rectifying switch of the first rectifier, and the third rectifying switch and the fourth rectifying switch of the second rectifier to configure the power converter to operate in a freewheeling state, in a second phase of the third pre-charge period, turning on the first switch and the fourth switch of the primary side bridge, and activating the first rectifying switch of the first rectifier and the third rectifying switch of the second rectifier to transfer energy from the power source to charge the bulk capacitor, and in a third phase of the third pre-charge period, turning on the second switch and the third switch of the primary side bridge, and activating the second rectifying switch of the first rectifier and the fourth rectifying switch of the second rectifier to transfer energy from the power source to charge the bulk capacitor.

A phase shift angle of the primary side bridge in the second pre-charge period is greater than a phase shift angle of the primary side bridge in the first pre-charge period; a phase shift angle of the primary side bridge in the third pre-charge period is greater than the phase shift angle of the primary side bridge in the second pre-charge period; and a duration of the first pre-charge period is greater than a duration of the second pre-charge period.

The method further comprises sensing a voltage across the bulk capacitor to obtain a feedback voltage, comparing the feedback voltage with a reference voltage to produce an error signal, processing the error signal with a proportional-integral controller to produce a compensation signal, subtracting the compensation signal from a predetermined phase shift angle to generate a commanded phase shift angle, and generating gate drive signals for the primary side bridge, the first rectifier, and the second rectifier based on the commanded phase shift angle.

The method further comprises sampling a voltage across the bulk capacitor at successive sample times to obtain a current sample and a preceding sample, in the first pre-charge period, determining a voltage difference between the current sample and the preceding sample, and when the voltage difference is less than a first threshold, transitioning the power converter to operate in the second pre-charge period, and in the second pre-charge period, determining the voltage difference between the current sample and the preceding sample, and when the voltage difference is less than a second threshold, transitioning the power converter to operate in the third pre-charge period.

## Claims

1. A method, **characterized by** comprising:
providing a power converter (100) coupled between a power source (BL) and a bulk capacitor (CB), wherein the power converter (100) comprises a first transformer, a second transformer, a first rectifier (101) coupled to a secondary side of the first transformer, a second rectifier (102) coupled to a secondary side of the second transformer, and a primary side bridge (103) coupled between the bulk capacitor (CB) and primary sides of the first transformer and the second transformer;
in a first pre-charge period, activating one switch selected from switches (SR1, SR2, SR3, SR4) of the first rectifier (101) and the second rectifier (102) to charge the bulk capacitor (CB);
in a second pre-charge period following the first pre-charge period, activating two switches selected from the switches (SR1, SR2, SR3, SR4) of the first rectifier (101) and the second rectifier (102) to charge the bulk capacitor (CB); and
in a third pre-charge period following the second pre-charge period, activating three switches selected from the switches (SR1, SR2, SR3, SR4) of the first rectifier (101) and the second rectifier (102) to charge the bulk capacitor (CB), wherein two of the three switches are synchronized with each other.

2. The method of claim 1, wherein:
the primary side bridge (103) comprises a first switch (Q1) and a second switch (Q2) connected in series between two terminals of the bulk capacitor (CB), and a third switch (Q3) and a fourth switch (Q4) connected in series between the two terminals of the bulk capacitor (CB);
a first primary winding (N13) and a second primary winding (N14) of the first transformer, and a third primary winding (N23) and a fourth primary winding (N24) of the second transformer are connected in series between a common node (P2) of the third switch (Q3) and the fourth switch (Q4), and a common node (P1) of the first switch (Q1) and the second switch (Q2);
a first secondary winding (N11) and a first rectifying switch (SR1) are connected in series between two terminals of the power source (BL), wherein the first secondary winding (N11) is magnetically coupled to the first primary winding (N13);
a second secondary winding (N12) and a second rectifying switch (SR2) are connected in series between the two terminals of the power source (BL), wherein the second secondary winding (N12) is magnetically coupled to the second primary winding (N14), and wherein the first rectifying switch (SR1) and the second rectifying switch (SR2) form the first rectifier (101), and the first primary winding (N13), the second primary winding (N14), the first secondary winding (N11) and the second secondary winding (N12) form the first transformer;
a third secondary winding (N21) and a third rectifying switch (SR3) are connected in series between the two terminals of the power source (BL), wherein the third secondary winding (N21) is magnetically coupled to the third primary winding (N23); and
a fourth secondary winding (N22) and a fourth rectifying switch (SR4) are connected in series between the two terminals of the power source (BL), wherein the fourth secondary winding (N22) is magnetically coupled to the fourth primary winding (N24), and wherein the third rectifying switch (SR3) and the fourth rectifying switch (SR4) form the second rectifier (102), and the third primary winding (N23), the fourth primary winding (N24), the third secondary winding (N21) and the fourth secondary winding (N22) form the second transformer.

3. The method of claims 1 or 2, further comprising:
in the first pre-charge period, activating the first rectifying switch (SR1) of the first rectifier (101) while controlling the second rectifying switch (SR2), the third rectifying switch (SR3) and the fourth rectifying switch (SR4) to remain non-conducting;
in the second pre-charge period, activating the first rectifying switch (SR1) and the second rectifying switch (SR2) of the first rectifier (101) while controlling the third rectifying switch (SR3) and the fourth rectifying switch (SR4) to remain non-conducting; and
in the third pre-charge period, activating the first rectifying switch (SR1) and the second rectifying switch (SR2) of the first rectifier (101), and the third rectifying switch (SR3) and the fourth rectifying switch (SR4) of the second rectifier (102)
, wherein:
a phase shift angle of the primary side bridge (103) in the second pre-charge period is greater than a phase shift angle of the primary side bridge (103) in the first pre-charge period; and
a phase shift angle of the primary side bridge (103) in the third pre-charge period is greater than the phase shift angle of the primary side bridge (103) in the second pre-charge period.

4. The method of claims 1 or 2, further comprising:
in the first pre-charge period, activating the first rectifying switch (SR1) of the first rectifier (101) while controlling the second rectifying switch (SR2), the third rectifying switch (SR3) and the fourth rectifying switch (SR4) to remain non-conducting;
in the second pre-charge period, activating the first rectifying switch (SR1) and the second rectifying switch (SR2) of the first rectifier (101) while controlling the third rectifying switch (SR3) and the fourth rectifying switch (SR4) to remain non-conducting;
in the third pre-charge period, activating the first rectifying switch (SR1) and the second rectifying switch (SR2) of the first rectifier (101), and the third rectifying switch (SR3) of the second rectifier (102) while controlling the fourth rectifying switch (SR4) to remain non-conducting; and
in a fourth pre-charge period following the third pre-charge period, activating the first rectifying switch (SR1) and the second rectifying switch (SR2) of the first rectifier (101), and the third rectifying switch (SR3) and the fourth rectifying switch (SR4) of the second rectifier (102)
, wherein:
a phase shift angle of the primary side bridge (103) in the second pre-charge period is greater than a phase shift angle of the primary side bridge (103) in the first pre-charge period;
a phase shift angle of the primary side bridge (103) in the third pre-charge period is greater than the phase shift angle of the primary side bridge (103) in the second pre-charge period;
a phase shift angle of the primary side bridge (103) in the fourth pre-charge period is greater than the phase shift angle of the primary side bridge (103) in the third pre-charge period;
a duration of the first pre-charge period is greater than a duration of the second pre-charge period; and
the duration of the second pre-charge period is greater than a duration of the third pre-charge period.

5. The method of claims 1 or 2, further comprising:
in the first pre-charge period, activating the first rectifying switch (SR1) of the first rectifier (101) while controlling the second rectifying switch (SR2), the third rectifying switch (SR3) and the fourth rectifying switch (SR4) to remain non-conducting;
in the second pre-charge period, activating the first rectifying switch (SR1) of the first rectifier (101) and the third rectifying switch (SR3) of the second rectifier (102) while controlling the second rectifying switch (SR2) and the fourth rectifying switch (SR4) to remain non-conducting; and
in the third pre-charge period, activating the first rectifying switch (SR1) and the second rectifying switch (SR2) of the first rectifier (101), and the third rectifying switch (SR3) and the fourth rectifying switch (SR4) of the second rectifier (102)
, wherein:
a phase shift angle of the primary side bridge (103) in the second pre-charge period is greater than a phase shift angle of the primary side bridge (103) in the first pre-charge period;
a phase shift angle of the primary side bridge (103) in the third pre-charge period is greater than the phase shift angle of the primary side bridge (103) in the second pre-charge period; and
a duration of the first pre-charge period is greater than a duration of the second pre-charge period.

6. A method, **characterized by** comprising:
configuring a power converter (100) to be coupled between a power source (BL) and a bulk capacitor (CB), wherein the power converter (100) comprises a first transformer, a second transformer, a first rectifier (101) coupled between the first transformer and the power source (BL), a second rectifier (102) coupled between the second transformer and the power source (BL), and a primary side bridge (103) coupled between the bulk capacitor (CB) and primary sides of the first transformer and the second transformer;
in a first pre-charge period, turning on and off one switch selected from switches (SR1, SR2, SR3, SR4) of the first rectifier (101) and the second rectifier (102) to charge the bulk capacitor (CB);
in a second pre-charge period following the first pre-charge period, turning on and off two switches selected from the switches (SR1, SR2, SR3, SR4) of the first rectifier (101) and the second rectifier (102) to charge the bulk capacitor (CB); and
in a third pre-charge period following the second pre-charge period, turning on and off four switches (SR1, SR2, SR3, SR4) of the first rectifier (101) and the second rectifier (102) to charge the bulk capacitor (CB).

7. The method of claim 6, wherein:
the primary side bridge (103) comprises a first switch (Q1) and a second switch (Q2) connected in series between two terminals of the bulk capacitor (CB), and a third switch (Q3) and a fourth switch (Q4) connected in series between the two terminals of the bulk capacitor (CB);
a first primary winding (N13) and a second primary winding (N14) of the first transformer, and a third primary winding (N23) and a fourth primary winding (N24) of the second transformer are connected in series between a common node (P2) of the third switch (Q3) and the fourth switch (Q4), and a common node (P1) of the first switch (Q1) and the second switch (Q2);
a first secondary winding (N11) and a first rectifying switch (SR1) are connected in series between two terminals of the power source (BL), wherein the first secondary winding (N11) is magnetically coupled to the first primary winding (N13);
a second secondary winding (N12) and a second rectifying switch (SR2) are connected in series between the two terminals of the power source (BL), wherein the second secondary winding (N12) is magnetically coupled to the second primary winding (N14), and wherein the first rectifying switch (SR1) and the second rectifying switch (SR2) form the first rectifier (101), and the first primary winding (N13), the second primary winding (N14), the first secondary winding (N11) and the second secondary winding (N12) form the first transformer;
a third secondary winding (N21) and a third rectifying switch (SR3) are connected in series between the two terminals of the power source (BL), wherein the third secondary winding (N21) is magnetically coupled to the third primary winding (N23); and
a fourth secondary winding (N22) and a fourth rectifying switch (SR4) are connected in series between the two terminals of the power source (BL), wherein the fourth secondary winding (N22) is magnetically coupled to the fourth primary winding (N24), and wherein the third rectifying switch (SR3) and the fourth rectifying switch (SR4) form the second rectifier (102), and the third primary winding (N23), the fourth primary winding (N24), the third secondary winding (N21) and the fourth secondary winding (N22) form the second transformer.

8. The method of claim 7, further comprising one of the steps: (a)
in a first phase of the first pre-charge period, turning on the second switch (Q2) and the fourth switch (Q4) of the primary side bridge (103), and activating the first rectifying switch (SR1) of the first rectifier (101) to store magnetic energy in the first transformer and the second transformer; and
in a second phase of the first pre-charge period, turning on the first switch (Q1) and the fourth switch (Q4) of the primary side bridge (103), and activating the first rectifying switch (SR1) of the first rectifier (101) to release stored magnetic energy to charge the bulk capacitor (CB)
; (b)
in a first phase of the second pre-charge period, turning on the second switch (Q2) and the fourth switch (Q4) of the primary side bridge (103), and activating the first rectifying switch (SR1) of the first rectifier (101) and the third rectifying switch (SR3) of the second rectifier (102) to store magnetic energy in the first transformer and the second transformer; and
in a second phase of the second pre-charge period, turning on the first switch (Q1) and the fourth switch (Q4) of the primary side bridge (103), and activating the first rectifying switch (SR1) of the first rectifier (101) and the third rectifying switch (SR3) of the second rectifier (102) to transfer stored magnetic energy to charge the bulk capacitor (CB)
; and (c)
in a first phase of the third pre-charge period, turning on the second switch (Q2) and the fourth switch (Q4) of the primary side bridge (103), and activating the first rectifying switch (SR1) and the second rectifying switch (SR2) of the first rectifier (101), and the third rectifying switch (SR3) and the fourth rectifying switch (SR4) of the second rectifier (102) to configure the power converter (100) to operate in a freewheeling state;
in a second phase of the third pre-charge period, turning on the first switch (Q1) and the fourth switch (Q4) of the primary side bridge (103), and activating the first rectifying switch (SR1) of the first rectifier (101) and the third rectifying switch (SR3) of the second rectifier (102) to transfer energy from the power source (BL) to charge the bulk capacitor (CB); and
in a third phase of the third pre-charge period, turning on the second switch (Q2) and the third switch (Q3) of the primary side bridge (103), and activating the second rectifying switch (SR2) of the first rectifier (101) and the fourth rectifying switch (SR4) of the second rectifier (102) to transfer energy from the power source (BL) to charge the bulk capacitor (CB).

9. The method of any one of preceding claims 6 to 8, wherein:
a phase shift angle of the primary side bridge (103) in the second pre-charge period is greater than a phase shift angle of the primary side bridge (103) in the first pre-charge period;
a phase shift angle of the primary side bridge (103) in the third pre-charge period is greater than the phase shift angle of the primary side bridge (103) in the second pre-charge period; and
a duration of the first pre-charge period is greater than a duration of the second pre-charge period.

10. The method of any one of preceding claims 6 to 8, further comprising:
sensing a voltage across the bulk capacitor (CB) to obtain a feedback voltage;
comparing the feedback voltage with a reference voltage to produce an error signal;
processing the error signal with a proportional-integral controller (300) to produce a compensation signal;
subtracting the compensation signal from a predetermined phase shift angle to generate a commanded phase shift angle; and
generating gate drive signals for the primary side bridge (103), the first rectifier (101), and the second rectifier (102) based on the commanded phase shift angle.

11. The method of any one of preceding claims 6 to 8, further comprising:
sampling a voltage across the bulk capacitor (CB) at successive sample times to obtain a current sample and a preceding sample;
in the first pre-charge period, determining a voltage difference between the current sample and the preceding sample, and when the voltage difference is less than a first threshold, transitioning the power converter (100) to operate in the second pre-charge period; and
in the second pre-charge period, determining the voltage difference between the current sample and the preceding sample, and when the voltage difference is less than a second threshold, transitioning the power converter (100) to operate in the third pre-charge period.

12. A system, **characterized by** comprising:
a bulk capacitor (CB) coupled to a high voltage power source (BH) through a relay (RL1), and coupled to a low voltage power source (BL) through a power converter (100) comprising a first transformer, a second transformer, a first rectifier (101) coupled between the first transformer and the low voltage power source (BL), a second rectifier (102) coupled between the second transformer and the low voltage power source (BL), and a primary side bridge (103) coupled between the bulk capacitor (CB) and primary sides of the first transformer and the second transformer; and
a controller (200) configured to:
in a first pre-charge period, activate one switch selected from switches (SR1, SR2, SR3, SR4) of the first rectifier (101) and the second rectifier (102) to charge the bulk capacitor (CB);
in a second pre-charge period following the first pre-charge period, activate two switches selected from the switches (SR1, SR2, SR3, SR4) of the first rectifier (101) and the second rectifier (102) to charge the bulk capacitor (CB); and
in a third pre-charge period following the second pre-charge period, activate three switches selected from the switches (SR1, SR2, SR3, SR4) of the first rectifier (101) and the second rectifier (102) to charge the bulk capacitor (CB), wherein two of the three switches are synchronized with each other.

13. The system of claim 12, wherein:
the primary side bridge (103) comprises a first switch (Q1) and a second switch (Q2) connected in series between two terminals of the bulk capacitor (CB), and a third switch (Q3) and a fourth switch (Q4) connected in series between the two terminals of the bulk capacitor (CB);
a first primary winding (N13) and a second primary winding (N14) of the first transformer, and a third primary winding (N23) and a fourth primary winding (N24) of the second transformer are connected in series between a common node (P2) of the third switch (Q3) and the fourth switch (Q4), and a common node (P1) of the first switch (Q1) and the second switch (Q2);
a first secondary winding (N11) and a first rectifying switch (SR1) are connected in series between two terminals of the low voltage power source (BL), wherein the first secondary winding (N11) is magnetically coupled to the first primary winding (N13);
a second secondary winding (N12) and a second rectifying switch (SR2) are connected in series between the two terminals of the low voltage power source (BL), wherein the second secondary winding (N12) is magnetically coupled to the second primary winding (N14), and wherein the first rectifying switch (SR1) and the second rectifying switch (SR2) form the first rectifier (101), and the first primary winding (N13), the second primary winding (N14), the first secondary winding (N11) and the second secondary winding (N12) form the first transformer;
a third secondary winding (N21) and a third rectifying switch (SR3) are connected in series between the two terminals of the low voltage power source (BL), wherein the third secondary winding (N21) is magnetically coupled to the third primary winding (N23); and
a fourth secondary winding (N22) and a fourth rectifying switch (SR4) are connected in series between the two terminals of the low voltage power source (BL), wherein the fourth secondary winding (N22) is magnetically coupled to the fourth primary winding (N24), and wherein the third rectifying switch (SR3) and the fourth rectifying switch (SR4) form the second rectifier (102), and the third primary winding (N23), the fourth primary winding (N24), the third secondary winding (N21) and the fourth secondary winding (N22) form the second transformer.

14. The system of claims 12 or 13, wherein:
in the first pre-charge period, the first rectifying switch (SR1) of the first rectifier (101) is activated;
in the second pre-charge period, the first rectifying switch (SR1) of the first rectifier (101) and the third rectifying switch (SR3) of the second rectifier (102) are activated; and
in the third pre-charge period, the first rectifying switch (SR1) and the second rectifying switch (SR2) of the first rectifier (101), and the third rectifying switch (SR3) and the fourth rectifying switch (SR4) of the second rectifier (102) are activated, and wherein:
a phase shift angle of the primary side bridge (103) in the second pre-charge period is greater than a phase shift angle of the primary side bridge (103) in the first pre-charge period;
a phase shift angle of the primary side bridge (103) in the third pre-charge period is greater than the phase shift angle of the primary side bridge (103) in the second pre-charge period; and
a duration of the first pre-charge period is greater than a duration of the second pre-charge period.

15. The system of any one of preceding claims 12 to 14, wherein:
the controller (200) comprises an error amplifier (304), a proportional-integral control apparatus (300), a subtraction unit (306) and a PWM generator (308), and wherein:
a voltage across the bulk capacitor (CB) is fed into an inverting input of the error amplifier (304);
a reference voltage is fed into a non-inverting input of the error amplifier (304);
an output of the error amplifier (304) is fed into an input of the proportional-integral control apparatus (300);
a predetermined phase shift angle is fed into a non-inverting input of the subtraction unit (306);
an output of the proportional-integral control apparatus (300) is fed into an inverting input of the subtraction unit (306); and
an output of the subtraction unit (306) is fed into the PWM generator (308) configured to generate gate drive signals for the primary side bridge (103), the first rectifier (101), and the second rectifier (102).
